# EUROPEAN PATENT SPECIFICATION

(11) **EP 4 632 515 B1**
(45) Date of publication and mention of the grant of the patent: **25.11.2026**
(21) Application number: 25157121.2
(22) Date of filing: 11.02.2025
(51) Int. Cl.: G05D 1/224, G05D 1/227, G05D 1/242, G05D 1/243, G05D 1/622, G05D 1/698, A01B 69/00

(54) **CONTROL METHOD, CONTROL PROGRAM, AND CONTROL SYSTEM**
STEUERUNGSVERFAHREN, STEUERUNGSPROGRAMM UND STEUERUNGSSYSTEM
PROCÉDÉ DE COMMANDE, PROGRAMME DE COMMANDE ET SYSTÈME DE COMMANDE

(30) Priority: 26.02.2024 JP 2024026247; 15.11.2024 JP 2024199778
(43) Date of publication of application: 15.10.2025
(73) Proprietor: Yanmar Holdings Co., Ltd., Osaka-shi, Osaka (JP)
(72) Inventor: NISHIBEPPU, Shinya, Okayama-shi (JP); MURAYAMA, Masaaki, Okayama-shi (JP); NISHII, Yasuto, Okayama-shi (JP)
(74) Representative: Sekiguchi, Kazuya

(56) References cited:
- WO-A1-2020/044805
- WO-A1-2023/119996
- JP-A- 2019 168 888
- US-A1- 2022 170 242

## Description

### TECHNICAL FIELD

The present disclosure relates to a control method of a work vehicle when the work vehicle which can autonomously travel detects an obstacle.

### BACKGROUND ART

Conventionally, a technique is known of causing a work vehicle to autonomously travel according to a target route which has been set in advance in a work region. In addition, a technique is also known, in which a distance to an object present in a traveling direction of the work vehicle is measured to determine whether the object is an obstacle or not, and a collision avoidance control for avoiding collision with the obstacle is performed on the condition that the obstacle is present within a predetermined detection range with respect to the work vehicle (for example, refer to Patent Document 1). Patent Document 2 discloses a machine comprising a work implement, one or more sensors, one or more cameras, one or more processors and one or more non-transitory computer-readable media storing instructions. Patent Document 3 discloses an obstacle detection system comprising an automatic travel control unit, a distance sensor, and an obstacle detection unit. Patent Document 4 discloses an obstacle detection system comprising a controller causing the camera to acquire an image of the obstacle candidate, and determining whether or not to change a traveling status of the agricultural machine based on the image of the obstacle candidate acquired with the camera.

### PRIOR ART DOCUMENT

### PATENT DOCUMENT

Patent Document 1: Japanese Patent Laid-open Publication No. 2021-65115
Patent Document 2: US 2022/170242 A1
Patent Document 3: JP 2019-168888 A
Patent Document 4: WO 2023/119996 A1

### SUMMARY OF INVENTION

### TECHNICAL PROBLEM

However, in the conventional techniques, for example, even when the object present outside a field is detected, the object may be determined to be the obstacle, so that the collision avoidance control is performed. In this way, when the object (detection target) having a low possibility of colliding with the work vehicle during the autonomous travel is determined as the obstacle and the collision avoidance control is performed, there is a problem of decreasing a work efficiency in the autonomous travel of the work vehicle.

An object of the present disclosure is to provide a control method, a control program, and a control system capable of preventing a work efficiency from being decreased when a work vehicle detects a detection target during an autonomous travel.

### SOLUTION TO PROBLEM

According to one aspect of the present disclosure, a control method is provided, which includes causing a work vehicle to execute treating processes different from each other depending on whether a detection target detected by a detector during an autonomous travel of the work vehicle in a work region is located inside the work region or located outside the work region.

According to another aspect of the present disclosure, a control method is also provided, which includes causing a work vehicle to execute treating processes different from each other depending on whether a detection target is located inside a vehicle control range set with the work vehicle as a reference or located outside the vehicle control range when the detection target detected by a detector while the work vehicle is autonomously traveling in a work region is located inside the work region.

According to another aspect of the present disclosure, a control program is provided, which causes one or more computer processors to execute a control method comprising causing a work vehicle to execute treating processes different from each other depending on whether a detection target detected by a detector during an autonomous travel of the work vehicle in a work region is located inside the work region or located outside the work region.

According to still another aspect of the present disclosure, a control system is provided, which causes a work vehicle to execute treating processes different from each other depending on whether a detection target detected by a detector during an autonomous travel of the work vehicle in a work region is located inside the work region or located outside the work region.

### ADVANTAGEOUS EFFECTS OF INVENTION

According to the present disclosure, it is possible to provide a control method, a control program, and a control system capable of preventing a work efficiency from being decreased when a work vehicle detects a detection target during the autonomous travel.

### BRIEF DESCRIPTION OF DRAWINGS

FIG. 1 is a block diagram schematically illustrating an autonomous travel system according to an embodiment of the present disclosure,
FIG. 2 is a side view of an example of a work vehicle according to the embodiment of the present disclosure,
FIG. 3 is a diagram illustrating an example of a measurement range of an obstacle sensor according to the embodiment of the present disclosure,
FIG. 4 is a diagram illustrating an example of a detection of a detection target by the work vehicle according to the embodiment of the present disclosure,
FIG. 5 is a diagram showing an example of a selection screen displayed on an operation terminal according to the embodiment of the present disclosure,
FIG. 6 is a diagram showing another example of a selection screen displayed on the operation terminal according to the embodiment of the present disclosure,
FIG. 7A is a diagram showing an example of an information display screen displayed on the operation terminal according to the embodiment of the present disclosure,
FIG. 7B is a diagram showing another example of the information display screen displayed on the operation terminal according to the embodiment of the present disclosure,
FIG. 7C is a diagram showing still another example of the information display screen displayed on the operation terminal according to the embodiment of the present disclosure,
FIG. 8 is a diagram showing an example of the selection screen and the information display screen collectively displayed on the operation terminal according to the embodiment of the present disclosure,
FIG. 9 is a diagram showing an example of a detection information displayed on the selection screen of the operation terminal according to the embodiment of the present disclosure,
FIG. 10 is a diagram showing an example of a detection information displayed on a camera screen of the operation terminal according to the embodiment of the present disclosure,
FIG. 11 is a diagram showing an example of a detection information displayed on the operation terminal according to the embodiment of the present disclosure,
FIG. 12 is a diagram showing another example of the detection information displayed on the selection screen of the operation terminal according to the embodiment of the present disclosure,
FIG. 13 is a flowchart illustrating an example of steps of an obstacle detection process executed by the autonomous travel system according to the embodiment of the present disclosure, and
FIG. 14 is a diagram showing an example of the detection information displayed on the information display screen of the operation terminal according to the embodiment of the present disclosure.

### DESCRIPTION OF EMBODIMENTS

In the following, an example embodying the present disclosure is given to be described.

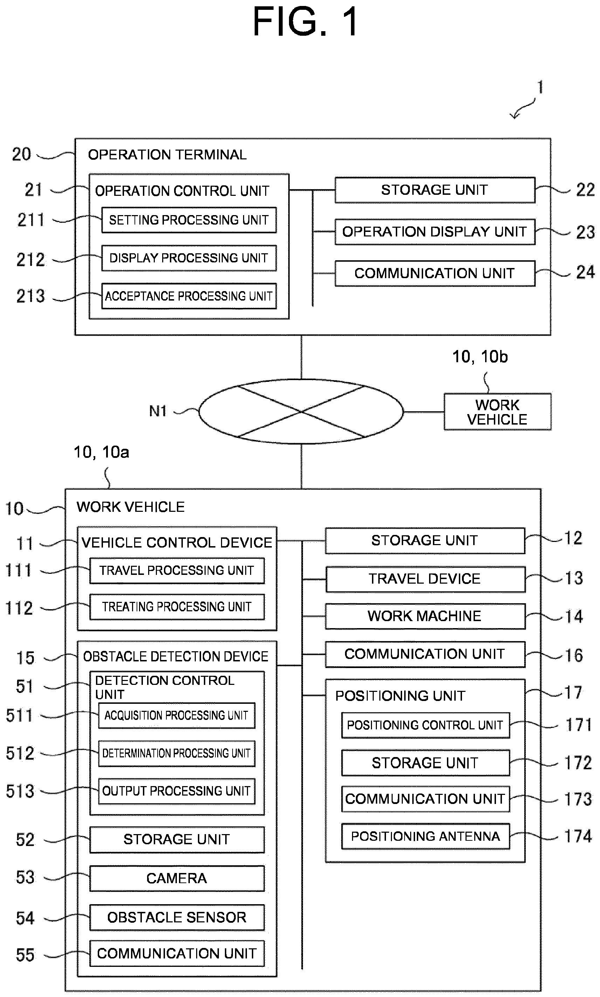

As shown in FIG. 1, an autonomous travel system 1 according to an embodiment of the present disclosure includes a work vehicle 10 and an operation terminal 20. The number of work vehicles 10 may be one or more. In the present embodiment, an example is given to be described of a case where the autonomous travel system 1 includes a plurality of work vehicles 10 (in FIG. 1, two work vehicles 10a and 10b). Note that, in the following, unless especially mentioned that the work vehicle 10a and the work vehicle 10b are not distinguished, they are referred to as a "work vehicle 10."

The work vehicle 10 and the operation terminal 20 can communicate with each other via a communication network N1. For example, the work vehicle 10 and the operation terminal 20 can communicate with each other via a mobile phone line network, a packet line network, or a wireless LAN.

In the present embodiment, an example is given to be described of a case where the work vehicle 10 is a tractor. Note that, in an alternative embodiment, the work vehicle 10 may be a combine harvester, a rice transplanter, a dispersion machine, a construction machine, a snowplow, or the like. Furthermore, the work vehicle 10a and the work vehicle 10b may be of different types or of the same type. The work vehicle 10 is provided with a configuration capable of autonomously traveling (automatically traveling) in a field (work region) along a target route set in advance. In addition, the work vehicle 10 can also perform a predetermined work while autonomously traveling in the field. Moreover, the work vehicle 10 is provided with a configuration capable of autonomously traveling on roads which connect a plurality of fields according to an inter-field route set in advance.

The work vehicle 10 can autonomously travel according to the target route and the inter-field route which are set in advance inside and outside the field (including roads and the like) on the basis of a position information of a current position of the work vehicle 10 calculated by a positioning unit 17. Note that the work vehicle 10 may also autonomously travel with a worker being getting on.

For example, after a target route including a work route, a travel start position, and a travel end position are set for a field, the work vehicle 10 performs a predetermined work while autonomously traveling in the field according to the target route from the travel start position to the travel end position.

Furthermore, after the work vehicle 10 finishes a work in one field, the work vehicle 10 can move to another field to perform another work. For example, after the work vehicle 10 finishes the work in a first field, the work vehicle 10 autonomously travels along an inter-field route set in advance on roads to move to a second field. When the work vehicle 10 arrives at the second field, the work vehicle 10 performs a predetermined work while autonomously traveling in the second field along a target route set in advance.

The target route in the field can be set as appropriate depending on a work content. Furthermore, the inter-field route on the roads is set in advance according to an operation (teaching operation) by an operator. The inter-field route may be a road exclusively travelable for work vehicles or a road such as a farm road, a forest road, a public road, a private road, and a motorway, which is travelable for general vehicles (such as passenger cars).

The operation terminal 20 is an information processing device to display various information associated with the work vehicle 10. For example, the operation terminal 20 displays the information associated with a preregistered work vehicle 10, such as position information of the current position, a travel status, a work status, and the like. A user (operator or monitoring person) of the operation terminal 20 is able to remotely monitor the work vehicle 10 by confirming the information.

### Work Vehicle 10

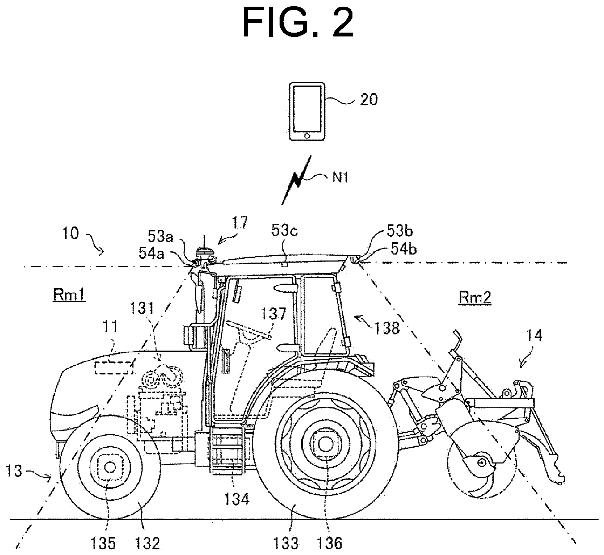

As shown in FIGS. 1 and 2, the work vehicle 10 includes a vehicle control device 11, a storage unit 12, a travel device 13, a work machine 14, an obstacle detection device 15, a communication unit 16, a positioning unit 17, and the like. The vehicle control device 11 is electrically connected to the storage unit 12, the travel device 13, the work machine 14, the obstacle detection device 15, the positioning unit 17, and the like. Note that the vehicle control device 11 may wirelessly communicate with the obstacle detection device 15, and the vehicle control device 11 may wirelessly communicate with the positioning unit 17.

The communication unit 16 is a communication interface which connects the work vehicle 10 to the communication network N1 wiredly or wirelessly and performs data communication according to a predetermined communication protocol with external devices (such as the operation terminal 20) via the communication network N1.

The storage unit 12 may be a non-volatile storage unit such as a Hard Disk Drive (HDD), a Solid State Drive (SSD), or a flash memory which can store various types of information. The storage unit 12 stores a control program such as an autonomous travel program for causing the vehicle control device 11 to execute autonomous travel processing. For example, the autonomous travel program is recorded non-transitorily in a computer-readable storage (recording) medium such as a CD or a DVD, which is read out by a predetermined reading out device (not shown) and then stored in the storage unit 12. Note that the autonomous travel program may be downloaded from a server (not shown) to the work vehicle 10 via the communication network N1 and then stored in the storage unit 12. The data such as a target route data may be also stored in the storage unit 12.

The travel device 13 is a drive unit to cause the work vehicle 10 to travel. As shown in FIG. 2, the travel device 13 includes an engine 131, front wheels 132, rear wheels 133, a transmission 134, a front axle 135, a rear axle 136, a steering wheel 137, and the like. Note that the front wheels 132 and the rear wheels 133 are provided on both sides of the work vehicle 10. Furthermore, the travel device 13 is not limited to a wheel-type device including the front wheels 132 and the rear wheels 133, and may be a crawler-type device including crawlers provided on both sides of the work vehicle 10.

The engine 131 is a drive source such as a diesel engine or a gasoline engine, either of which is driven using fuel supplied to a fuel tank (not shown). The travel device 13 may include an electric motor as a drive source in addition to or instead of the engine 131. Note that an electric generator (not shown) is connected to the engine 131, and electric power is supplied from the electric generator to electric components provided in the work vehicle 10, such as the vehicle control device 11, the obstacle detection device 15, and the positioning unit 17, and a battery and the like. Note that the battery is charged by the electric power supplied from the electric generator. The electric power from the battery enables the electric components provided in the work vehicle 10 such as the vehicle control device 11, the obstacle detection device 15, and the positioning unit 17 to be driven even after the engine 131 is stopped.

Driving force is transmitted from the engine 131 to the front wheels 132 via the transmission 134 and the front axle 135, and is also transmitted from the engine 131 to the rear wheels 133 via the transmission 134 and the rear axle 136. Furthermore, the driving force is also transmitted from the engine 131 to the work machine 14 via a PTO shaft (not shown). When the work vehicle 10 autonomously travels, the travel device 13 performs a travel operation according to instructions issued from the vehicle control device 11. In addition, the travel device 13 causes the work vehicle 10 to decelerate or stop according to the instructions issued from the vehicle control device 11.

The work machine 14 may be, for example, a cultivator, a mower, a plow, a fertilizer applicator, a sprayer (chemical dispersion machine), a puddling machine, a seeding machine, or the like, and may be detachably mounted on the work vehicle 10. This allows the work vehicle 10 to perform various types of works by using the various types of work machines 14. FIG. 2 shows a case where the work machine 14 is a cultivator.

The steering wheel 137 is an operation unit which is operated by the worker or the vehicle control device 11. For example, a hydraulic power steering mechanism (not shown) or the like changes an angle of the front wheels 132 of the travel device 13 in response to an operation of the steering wheel 137 by the vehicle control device 11, so that the traveling direction of the work vehicle 10 is changed.

In addition to the steering wheel 137, the travel device 13 includes a shift lever, an accelerator, a brake, and the like (not shown) which are operated by the vehicle control device 11. A gear of the transmission 134 in the travel device 13 is switched to a forward gear, a reverse gear, or the like in response to an operation of the shift lever by the vehicle control device 11, so that a travel mode of the work vehicle 10 is switched to a forward travel, a reverse travel, or the like. Furthermore, the vehicle control device 11 controls a rotation speed of the engine 131 by operating the accelerator. Moreover, the vehicle control device 11 brakes the front wheels 132 and the rear wheels 133 by operating the brake to use an electromagnetic brake.

The positioning unit 17 is a communication device which includes a positioning control unit 171, a storage unit 172, a communication unit 173, a positioning antenna 174, and the like. For example, as shown in FIG. 2, the positioning unit 17 is provided on top of a cabin 138 for the worker to get in. However, a mounting position of the positioning unit 17 is not limited to the cabin 138. Furthermore, the positioning control unit 171, the storage unit 172, the communication unit 173, and the positioning antenna 174 of the positioning unit 17 may be dispersedly disposed at different positions in the work vehicle 10. Note that, as mentioned above, as the battery is connected to the positioning unit 17, the positioning unit 17 is operable even when the engine 131 is stopped. Alternatively, for example, a mobile phone terminal, a smartphone, a tablet terminal, a quantum compass, or the like may be substituted for the positioning unit 17.

The positioning control unit 171 is a computer system which includes one or more processors and a storage memory such as a non-volatile memory and a RAM. The storage unit 172 is a non-volatile memory or the like which stores a program for causing the positioning control unit 171 to execute a positioning process and the data such as a positioning information and a movement information. For example, the program is non-transitorily recorded in a computer-readable storage medium such as a CD or a DVD, read out by a predetermined reading device (not shown), and then stored in the storage unit 172. Note that the program may be downloaded from a server (not shown) to the positioning unit 17 via the communication network N1 to be stored in the storage unit 172.

The communication unit 173 is a communication interface which connects the positioning unit 17 to the communication network N1 wiredly or wirelessly and performs data communication according to a predetermined communication protocol with external devices such as a base station server via the communication network N1.

The positioning antenna 174 is an antenna to receive radio waves (GNSS signals) transmitted from satellites.

The positioning control unit 171 calculates the current position of the work vehicle 10 based on GNSS signals received from the satellites by the positioning antenna 174. For example, when the work vehicle 10 autonomously travels in the field, once the positioning antenna 174 receives radio waves (such as a transmitted time and an orbit information) transmitted from each of the plurality of satellites, the positioning control unit 171 calculates a distance between the positioning antenna 174 and each of the satellites, and calculates the current position (latitude and longitude) of the work vehicle 10 based on the calculated distances. Furthermore, the positioning control unit 171 may perform the positioning by a real-time kinematic method (RTK-GNSS positioning method (RTK method)) for calculating the current position of the work vehicle 10 using a correction information corresponding to a base station (reference station) close to the work vehicle 10. In this way, the work vehicle 10 can perform the autonomous travel using the positioning information obtained by the RTK method. Note that the current position of the work vehicle 10 may be either the same position as a positioning position (for example, the position of the positioning antenna 174) or a position offset from the positioning position. Furthermore, the positioning control unit 171 may calculate (position) the current position of the work vehicle 10 using the quantum compass.

When the obstacle detection device 15 detects a detection target (obstacle) while the work vehicle 10 is autonomously traveling, the obstacle detection device 15 outputs a measurement information to the vehicle control device 11. Specifically, the obstacle detection device 15 includes a detection control unit 51, a storage unit 52, a camera 53, an obstacle sensor 54, a communication unit 55, and the like.

The obstacle detection device 15 may be either configured as a single unit and mounted on the work vehicle 10 or dispersedly disposed as a plurality of components in the work vehicle 10.

The communication unit 55 is a communication interface which connects the obstacle detection device 15 to the communication network N1 wiredly or wirelessly and performs the data communication according to a predetermined communication protocol with external devices (such as the operation terminal 20) via the communication network N1.

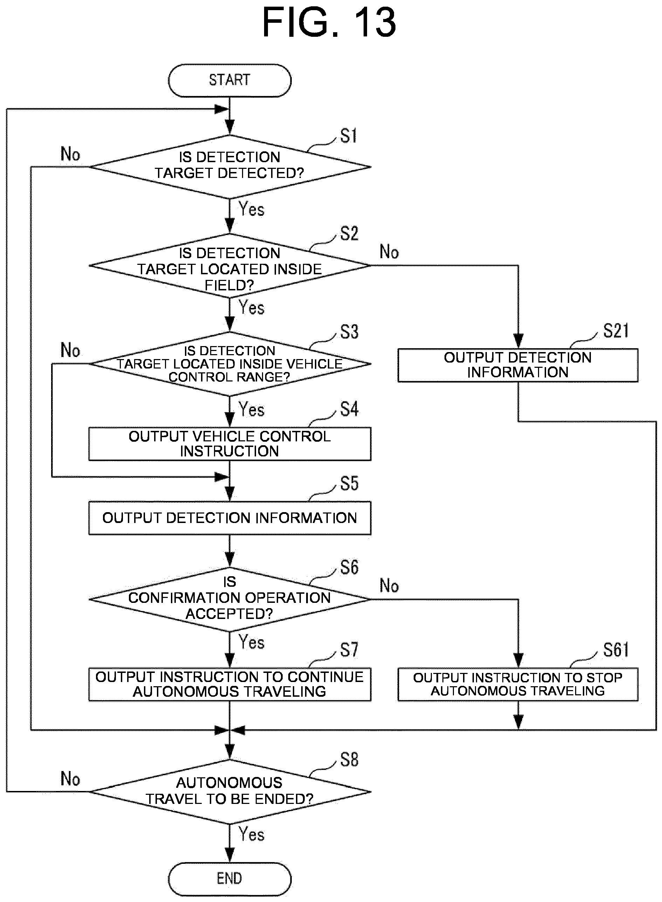

The storage unit 52 is a non-volatile storage unit, such as an HDD, an SSD, or a flash memory, to store various types of information. The storage unit 52 stores a control program such as an obstacle detection program for causing the obstacle detection device 15 to execute an obstacle detection process (see FIG. 13). For example, the obstacle detection program is non-transitorily recorded in the computer-readable storage medium such as the CD or the DVD, read out by a predetermined reading device (not shown), and then stored in the storage unit 52. Note that the obstacle detection program may be downloaded from the server (not shown) to the obstacle detection device 15 via the communication network N1 to be stored in the storage unit 52.

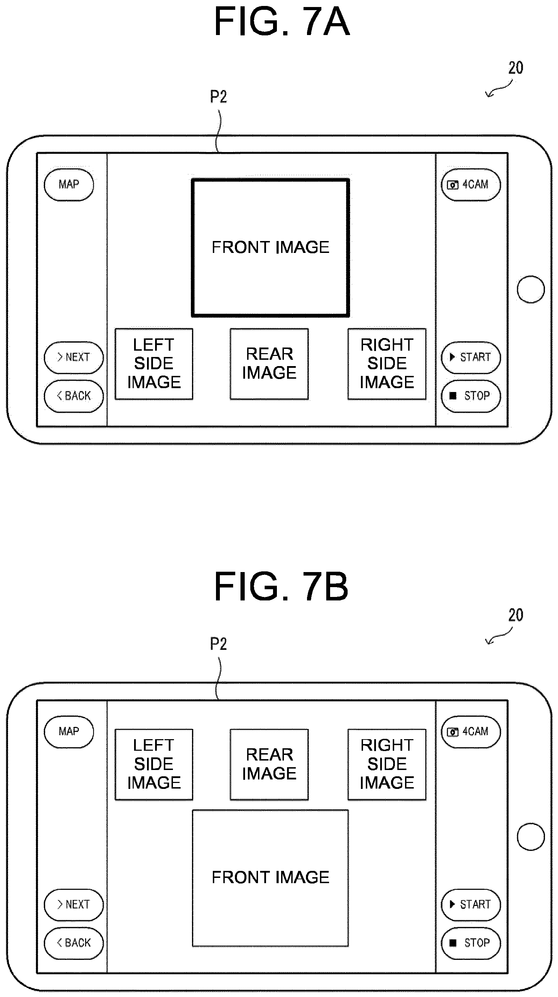

The camera 53 is a digital camera which captures an image of a subject included within a predetermined imaging range and outputs the captured image as digital image data. The camera 53 continuously captures images of the subject at a predetermined frame rate, generates frame images (captured images) of a predetermined resolution, and transmits the frame images to the detection control unit 51 successively. Furthermore, the camera 53 transmits the image data of the captured images to the operation terminal 20 via the communication unit 55. The operation terminal 20 enables an operation screen of an operation display unit 23 to display the captured images (see FIG. 7A and the like).

The camera 53 includes a front camera 53a capable of capturing images within a front imaging range on the front side as viewed from the work vehicle 10, a rear camera 53b capable of capturing images within a rear imaging range on the rear side as viewed from the work vehicle 10, a left camera 53c capable of capturing images within a left imaging range on the left side as viewed from the work vehicle 10, and a right camera (not shown) capable of capturing images within a right imaging range on the right side as viewed from the work vehicle 10. As shown in FIG. 2, the front camera 53a is disposed on the upper-front side of the cabin 138, the rear camera 53b is disposed on the upper-rear side of the cabin 138, the left camera 53c is disposed on the upper-left side of the cabin 138, and the right camera is disposed on the upper-right side of the cabin 138. Note that the camera 53 may be configured from only the front camera 53a and the rear camera 53b. Otherwise, the camera 53 may be configured from a single camera which is an omnidirectional camera capable of capturing images in all directions around the work vehicle 10.

The obstacle sensor 54 is a sensor which detects the detection target inside a predetermined detection range using infrared rays, ultrasonic waves, or the like. For example, the obstacle sensor 54 may be either a LiDAR sensor (distance sensor) capable of three-dimensionally measuring a distance to the detection target using a laser or a sonar sensor including a plurality of sonars capable of measuring the distance to the detection target using ultrasonic waves. The obstacle sensors 54 are mounted on a front-center portion, a rear-center portion, and the like of a machine body of the work vehicle 10, and monitor a circumstance around the work vehicle 10 to detect obstacles. In the present embodiment, an example is given to be described of a case where the obstacle sensor 54 includes a front obstacle sensor 54a capable of detecting the detection target inside the front detection range and the side (left and right) detection range as viewed from the work vehicle 10, and a rear obstacle sensor 54b capable of detecting the detection target inside the rear detection range and the side (left and right) detection range as viewed from the work vehicle 10. As shown in FIG. 2, the front obstacle sensor 54a is disposed on the upper-front side of the cabin 138, and the rear obstacle sensor 54b is disposed on the upper-rear side of the cabin 138. The front obstacle sensor 54a and the rear obstacle sensor 54b enable the work vehicle 10 to detect the detection target inside a predetermined detection range around the work vehicle 10. The front camera 53a and the front obstacle sensor 54a may be configured as a single unit, and the rear camera 53b and the rear obstacle sensor 54b may be configured as a single unit. Note that the obstacle sensor 54 may include a left side obstacle sensor capable of detecting the detection target inside a left detection range on the left side as viewed from the work vehicle 10, and a right side obstacle sensor capable of detecting the detection target inside a right detection range on the right side as viewed from the work vehicle 10.

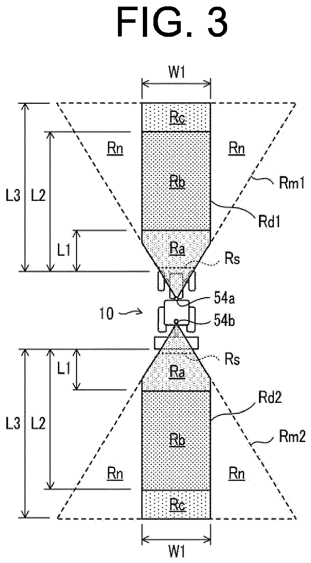

FIG. 3 shows an example of measurement ranges (detection ranges) of the front obstacle sensor 54a and the rear obstacle sensor 54b. Note that, hereinafter, in the description which is common to both the front obstacle sensor 54a and the rear obstacle sensor 54b, those are referred to as an "obstacle sensor 54".

The obstacle sensor 54, for example, measures a distance to each ranging point (measurement target) which exists in the measurement range using a laser (such as a near-infrared laser beam), and generates a distance image or the like based on the measurement information. The obstacle sensor 54 includes an electronic control unit in which a microcontroller and the like are integrated and a processing unit which is built by various control programs and the like, and is connected to the detection control unit 51, the vehicle control device 11, and the like via a CAN in a mutual communicable manner.

As shown in FIGS. 2 and 3, in the front obstacle sensor 54a a first measurement range Rm1 forward the cabin 138 is set to a measurement range (detection range), and in the rear obstacle sensor 54b a second measurement range Rm2 rearward the cabin 138 is set to a measurement range (detection range).

As shown in FIG. 3, the front obstacle sensor 54a and the rear obstacle sensor 54b are disposed on a left-right center line of the work vehicle 10 in a similar manner to the front camera 53a and the rear camera 53b. The front obstacle sensor 54a is disposed at an upper left-right-center position on the front end side of the cabin 138 with a posture being tilted down so as to look down the front side of the work vehicle 10 from diagonally above. As a result, in the front obstacle sensor 54a, a predetermined range on the front side of the vehicle body is set to the first measurement range Rm1 so that a symmetry axis thereof coincides with the left-right center line of the work vehicle 10. The rear obstacle sensor 54b is disposed at an upper left-right-center position on the rear end side of the cabin 138 with a posture being tilted down so as to look down the rear side of the work vehicle 10 from diagonally above. As a result, in the rear obstacle sensor 54b, a predetermined range on the rear side of the vehicle body is set to the second measurement range Rm2 so that a symmetry axis thereof coincides with the left-right center line of the work vehicle 10.

The front obstacle sensor 54a and the rear obstacle sensor 54b measure the respective distances from the obstacle sensors 54a and 54b to the respective ranging points inside the first measurement range Rm1 and the second measurement range Rm2, using a Time Of Flight (TOF) method in which the distance to the ranging point is measured on the basis of a round-trip time from an emission of a laser to a return of the laser reflected by the ranging point. The front obstacle sensor 54a scans the laser vertically and horizontally at a high speed over the entire first measurement range Rm1 and performs a three dimensional measurement in the first measurement range Rm1 by measuring sequentially a distance to the ranging point for each scanning angles (coordinates). The front obstacle sensor 54a sequentially measures an intensity (reflection intensity) of the acquired light reflected from each of the ranging points. The front obstacle sensor 54a repeatedly measures in a real time manner a distance to each of the ranging points inside the first measurement range Rm1, each of the reflection intensities, and the like.

The rear obstacle sensor 54b scans the laser vertically and horizontally at a high speed over the entire second measurement range Rm2 and performs a three dimensional measurement in the second measurement range Rm2 by measuring sequentially a distance to the ranging point for each scanning angles (coordinates). The rear obstacle sensor 54b sequentially measures an intensity (reflection intensity) of the acquired light reflected from each of the ranging points. The rear obstacle sensor 54b repeatedly measures in a real time manner a distance to each of the ranging points inside the second measurement range Rm2, each of the reflection intensities, and the like.

The front obstacle sensor 54a and the rear obstacle sensor 54b generate the distance image and extract a group of the ranging points presumed as an obstacle from the measurement information, such as the measured distances to the ranging points and the scanning angles (coordinates) with respect to the ranging points, and transmit the measurement information regarding the extracted group of the ranging points to the detection control unit 51 as the measurement information associated with the obstacle.

The front obstacle sensor 54a and the rear obstacle sensor 54b set a first vehicle control range Rd1 on the front side of the work vehicle 10 inside the obstacle detection range for the front obstacle sensor 54a and a second vehicle control range Rd2 on the rear side of the work vehicle 10 inside the obstacle detection range for the rear obstacle sensor 54b by performing a cutting process and a masking process on the first measurement range Rm1 and the second measurement range Rm2 based on the vehicle body information or the like (see FIG. 3).

In the cutting process, the front obstacle sensor 54a and the rear obstacle sensor 54b acquire the maximum left-right width of the vehicle body including the work machine 14 (the left-right width of the tiller in the present embodiment) through a communication with the vehicle control device 11, and set a vehicle control width W1 against the obstacle by adding a predetermined safety zone to the maximum left-right width of the vehicle body. Subsequently, left and right ranges outside the vehicle control range W1 inside the first measurement range Rm1 and the second measurement range Rm2 are set to non-vehicle control ranges Rn by the cutting process, and the non-vehicle control ranges Rn are excluded from the vehicle control ranges Rd1 and Rd2.

Furthermore, in the masking process, the front obstacle sensor 54a and the rear obstacle sensor 54b set non-detection ranges Rs by adding a predetermined safety zone to a range in which the front end side of the work vehicle 10 enters into the first measurement range Rm1 and a range in which the rear end side of the work machine 14 enters into the second measurement range Rm2, and the non-detection ranges Rs are excluded from the measurement ranges (detection ranges) Rm1 and Rm2.

In this way, the detection range of the detection target is set to the first measurement range Rm1 and the second measurement range Rm2, and the vehicle control range is set inside the measurement ranges Rm1 and Rm2, so that it is possible to execute a process (treating process described later) according to the position of the detection target in each of the measurement ranges Rm1 and Rm2 when the detection target is detected.

The information associated with the first vehicle control range Rd1, the second vehicle control range Rd2, the non-vehicle control range Rn, and the non-detection range Rs is included in the distance image mentioned above, and is transmitted to the detection control unit 51 together with the distance image.

As shown in FIG. 3, each of the vehicle control range Rd1 for the front obstacle sensor 54a and the vehicle control range Rd2 for the rear obstacle sensor 54b is divided into a stop control range Ra, a deceleration control range Rb, and a sounding control range Rc based on a collision determination process in which a collision prediction time is a setting time (for example, three seconds).

Specifically, the stop control range Ra is set to a range from the front obstacle sensor 54a or the rear obstacle sensor 54b to a determination reference position of the collision determination process. The deceleration control range Rb is set to a range from the determination reference position to a deceleration start position. The sounding control range Rc is set to a range from the deceleration start position to a measurement limitation position of the front obstacle sensor 54a or the rear obstacle sensor 54b. The determination reference position is set to a position away from the front end or the rear end of the vehicle body including the work machine 14 by a predetermined distance L1 (for example, 2 m) in the front-rear direction of the vehicle body. In the present embodiment, the range away from the work vehicle 10 by the distance L1 is set to the stop control range Ra, the range between the distance L1 and a distance L2 (for example, 5 m or less) is set to the deceleration control range Rb, and the range between the distance L2 and a distance L3 (for example, 10 m or less) is set to the sounding control range Rc.

Furthermore, the non-vehicle control ranges Rn of the front obstacle sensor 54a and the rear obstacle sensor 54b, that is, the range excluding the stop control range Ra, the deceleration control range Rb, and the sounding control range Rc inside the first measurement range Rm1 and the second measurement range Rm2 is set to a range where a travel control process of stopping and decelerating and a sounding process of an alarm are not performed. Furthermore, the first measurement range Rm1 and the second measurement range Rm2 are set to a range where the notification process of notifying an operator (remote monitor) that the detection target is detected is performed. In an alternative embodiment, the sounding control range Rc and the non-vehicle control range Rn may be set to a single range where the same processes (sounding process and notification process) are performed.

Note that the control ranges Ra, Rb, and Rc in the first vehicle control range Rd1 for the front obstacle sensor 54a and the second vehicle control range Rd2 for the rear obstacle sensor 54b can be set according to the type, model, work content, speed, and the like of the work vehicle 10. Furthermore, the cutting process may not be carried out to the first measurement range Rm1 for the front obstacle sensor 54a and the second measurement range Rm2 for the rear obstacle sensor 54b.

In an alternative embodiment, in the cutting process of the first measurement range Rm1 and the second measurement range Rm2, the non-vehicle control range Rn may be set to the non-detection range where the detection target is not detected. In this case, when the detection target is detected inside the non-vehicle control range Rn, the notification process of notifying the operator that the detection target is detected is not performed. In an alternative embodiment, the operator may select whether or not to set the non-vehicle control range Rn to the non-detection range. When the non-vehicle control range Rn is set to the non-detection range, the control ranges Ra, Rb, and Rc may be set to a range where the notification process is performed in addition to the vehicle control process.

The detection control unit 51 outputs the measurement information acquired from the obstacle sensor 54 to the vehicle control device 11. The detection control unit 51 sequentially outputs the measurement information to the vehicle control device 11 every time the detection control unit 51 acquires the measurement information from the obstacle sensor 54 while the work vehicle 10 is autonomously traveling. In an alternative embodiment, the detection control unit 51 may determine the type (such as a person, a vehicle, a structure, or materials) of the detection target (measurement target) based on the captured images acquired from the camera 53 and the measurement information acquired from the obstacle sensor 54, and output the result of determination to the vehicle control device 11. In the following, an example is given to be described of a case where the detection target in the forward direction is detected when the work vehicle 10 is autonomously traveling forward, and an example of a case where the detection target in the rearward direction is detected when the work vehicle 10 is autonomously traveling backward is omitted.

The detection control unit 51 includes control devices such as a CPU, a ROM, and a RAM. The CPU is a processor which executes various types of arithmetic processing. The ROM is a non-volatile storage unit which stores in advance control programs such as a BIOS and an OS for causing the CPU to execute the various types of the arithmetic processing. The RAM is a volatile or non-volatile storage unit which stores various types of information, and is used as a transitory storage memory (work area) for various types of processing executed by the CPU. The detection control unit 51 controls the obstacle detection device 15 by causing the CPU to execute various types of control programs stored in advance in the ROM or the storage unit 52.

Specifically, as shown in FIG. 1, the detection control unit 51 includes various types of processing units, such as an acquisition processing unit 511, a determination processing unit 512, and an output processing unit 513. Note that the obstacle detection device 15 functions as the various types of processing units by causing the CPU to execute various types of processing according to the obstacle detection program. Furthermore, some or all of the processing units may be configured by electronic circuits. The obstacle detection program may be a program for causing the plurality of processors to function as the processing units.

The acquisition processing unit 511 acquires the captured images from the camera 53 and acquires the measurement information from the obstacle sensor 54. Specifically, once the work vehicle 10 starts autonomously traveling, the acquisition processing unit 511 successively acquires from the front camera 53a the captured images of the imaging range in the forward traveling direction while autonomously traveling. The acquisition processing unit 511 stores the acquired captured images in the storage unit 52. Furthermore, once the work vehicle 10 starts autonomously traveling, the acquisition processing unit 511 successively acquires from the front obstacle sensor 54a measurement information (a group of ranging points, a distance image, and the like) of the first measurement range Rm1 (see FIG. 3) in the forward traveling direction while autonomously traveling. The acquisition processing unit 511 stores the acquired measurement information in the storage unit 52.

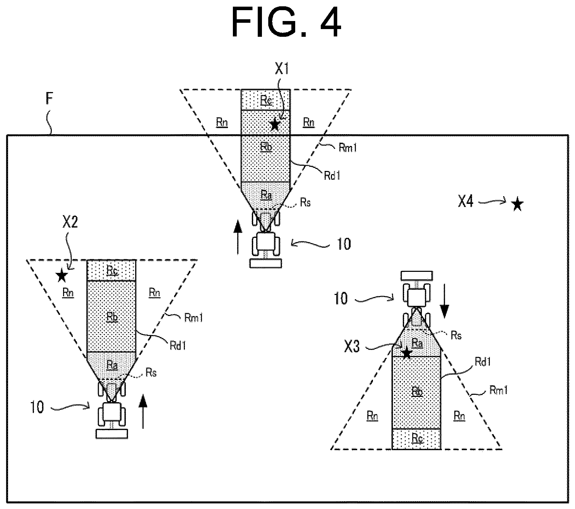

The determination processing unit 512 determines the detection position of the detection target based on the measurement information acquired by the acquisition processing unit 511. Specifically, the determination processing unit 512 determines whether the detection target is located inside the field F or located outside the field F based on the current position of the work vehicle 10 in the field F and the measurement information. For example, as shown in FIG. 4, when the work vehicle 10 is autonomously traveling near a boundary (outer circumferential edge) of the field F, the first measurement range Rm1 may project out from the field F. In this case, if the detection target X1 is present around outside the field F, the detection target X1 is contained inside the first measurement range Rm1, so that the front obstacle sensor 54a detects the detection target X1. The determination processing unit 512 specifies the position of the detection target based on the current position (positioned position) of the work vehicle 10 in the field F and the measurement information of the front obstacle sensor 54a, and determines whether the detection target is located inside the field F or located outside the field F.

In the example shown in FIG. 4, the determination processing unit 512 determines that the detection target X1 is located outside the field F when the detection target X1 is detected, and determines that the detection targets X2 and the X3 are located inside the field F when the detection targets X2 and the X3 are detected. Note that since the detection target X4 is located outside the first measurement range Rm1 for the front obstacle sensor 54a, it is assumed that the detection target is not detected by the front obstacle sensor 54a in this example.

Furthermore, the determination processing unit 512 determines whether the detection target is located inside the vehicle control range set with the work vehicle 10 as a reference or is located outside the vehicle control range. Note that the vehicle control range refers to a range in which the work vehicle 10 is caused to execute a predetermined vehicle control process (travel control process such as stopping process and decelerating process, sounding process for issuing the alarm or the like to the outside, and the like) when the detection target is contained in the vehicle control range.

Specifically, the determination processing unit 512 determines whether the detection target is located inside the first vehicle control range Rd1 or located outside the first vehicle control range Rd1 based on the current position of the work vehicle 10 in the field F and the measurement information. Furthermore, for example, based on the current position of the work vehicle 10 and the measurement information, the determination processing unit 512 determines whether the detection target is located inside any of the stop control range Ra, the deceleration control range Rb, and the sounding control range Rc, or is located inside none of the stop control range Ra, the deceleration control range Rb, and the sounding control range Rc. Moreover, the determination processing unit 512 determines inside which of the stop control range Ra, the deceleration control range Rb, the sounding control range Rc, and the non-vehicle control range Rn the position of the detection target is.

In the example shown in FIG. 4, the determination processing unit 512 determines that the detection target X2 is located outside the first vehicle control range Rd1 (inside the non-vehicle control range Rn) when the detection target X2 is detected, and determines that the detection target X3 is located inside the first vehicle control range Rd1 and inside the stop control range Ra when the detection target X3 is detected.

In an alternative embodiment, the determination processing unit 512 may determine whether the detection target is located inside the first vehicle control range Rd1 or located outside the first vehicle control range Rd1 on condition that the position of the detection target is determined as inside the field F. Therefore, when the determination processing unit 512 detects the detection target X1 outside the field F, it is not necessary for the determination processing unit 512 to determine whether or not the position of the detection target X1 is located inside the first vehicle control range Rd1.

In an alternative embodiment, the determination processing unit 512 may determine the position of the detection target based on the captured image acquired from the camera 53. Furthermore, the determination processing unit 512 may determine the position of the detection target based on the captured image acquired from the camera 53 and the measurement information acquired from the obstacle sensor 54.

The output processing unit 513 outputs a treating information corresponding to the result of determination of the determination processing unit 512 to the vehicle control device 11 and the operation terminal 20. Specifically, when the detection target is detected, the output processing unit 513 outputs (notifies) the detection information indicating that the detection target is detected to the operation terminal 20 to causes the operation terminal 20 to display the detection information. Note that the output processing unit 513 may transmit the detection information to the operation terminal 20 through email. Furthermore, when the detection target is detected, the output processing unit 513 outputs the vehicle control information (stopping instruction, decelerating instruction, sounding instruction, or the like) for controlling the work vehicle 10 to the vehicle control device 11 to causes the vehicle control device 11 to execute the vehicle control processes (stopping process, decelerating process, sounding process, or the like). Specific examples of the display process of the detection information and the vehicle control process are described later.

The detection control unit 51 may be configured to determine whether or not the detection target is an obstacle based on the captured image acquired from the camera 53, output the treating information to the vehicle control device 11 and the operation terminal 20 if determining that the detection target is the obstacle, and not output the treating information to the vehicle control device 11 and the operation terminal 20 if determining that the detection target is not the obstacle.

The vehicle control device 11 includes control devices such as a CPU, a ROM, a RAM, and the like. The CPU is a processor which executes various types of arithmetic processing. The ROM is a non-volatile storage unit which stores in advance control programs such as a BIOS and an OS for causing the CPU to execute the various types of the arithmetic processing. The RAM is a volatile or non-volatile storage unit which stores various types of information, and is used as a transitory storage memory for various types of processing executed by the CPU. The vehicle control device 11 controls the work vehicle 10 by causing the CPU to execute various types of control programs stored in advance in the ROM or the storage unit 12.

Specifically, as shown in FIG. 1, the vehicle control device 11 includes various processing units such as a travel processing unit 111. The vehicle control device 11 functions as the various processing units by causing the CPU to execute various types of processing according to the autonomous travel program. Furthermore, some or all of the processing units may be configured by electronic circuits. Note that the autonomous travel program may be a program for causing a plurality of processors to function as the processing units.

The travel processing unit 111 controls the travel of the work vehicle 10. For example, when a travel mode of the work vehicle 10 is an autonomous travel (autonomous travel mode), the travel processing unit 111 causes the work vehicle 10 to autonomously travel based on the position information (positioning information) indicating the current position of the work vehicle 10, which is positioned by the positioning unit 17. For example, when the work vehicle 10 meets a start condition of an autonomous travel and the travel processing unit 111 acquires a travel start instruction from the worker, the travel processing unit 111 causes the work vehicle 10 to start autonomously traveling based on the positioning information. For example, the travel processing unit 111 causes the work vehicle 10 to autonomously travel from a travel start position to a travel end position according to a target route which is generated and set in advance in the operation terminal 20.

Note that, when the travel mode of the work vehicle 10 is a manual travel (manual travel mode), the work vehicle 10 can perform a manual travel based on operations by the worker (manual steering). For example, the travel processing unit 111 acquires operation information corresponding to driving operations, such as steering wheel operations, speed change operations, travel direction switching operations, braking operations, and the like performed by the worker, and causes the travel device 13 to execute the travel operation based on the operation information.

In addition, the travel processing unit 111 executes a predetermined treating process when the detection target (obstacle) is detected while the work vehicle 10 is autonomously traveling. Specifically, the travel processing unit 111 executes the treating processes, such as a travel control process for controlling the travel of the work vehicle 10 and a sounding process for issuing the alarm, based on the treating information (stopping instruction, decelerating instruction, sounding instruction, and the like) output from the detection control unit 51 (output processing unit 513). Specific examples of the treating processes are described later.

Furthermore, the travel processing unit 111 controls the travel according to instructions acquired from the operation terminal 20.

For example, when the travel processing unit 111 acquires a travel start instruction from the operation terminal 20, the travel processing unit 111 causes the work vehicle 10 to start autonomously traveling, and when the travel processing unit 111 acquires a travel stopping instruction from the operation terminal 20, the travel processing unit 111 causes the work vehicle 10 to stop autonomously traveling.

### Operation Terminal 20

As shown in FIG. 1, the operation terminal 20 is an information processing device including an operation control unit 21, a storage unit 22, an operation display unit 23, a communication unit 24, and the like. For example, the operation terminal 20 is configured by a mobile terminal such as a smartphone (see FIG. 2 and other drawings) or a tablet terminal. Note that the operation terminal 20 may be a stationary type (desktop type) personal computer.

The communication unit 24 is a communication interface which connects the operation terminal 20 to the communication network N1 wiredly or wirelessly to execute a data communication according to a predetermined communication protocol with the external devices such as one or more work vehicles 10 via the communication network N1.

The operation display unit 23 is a user interface including a display unit, such as a liquid crystal display or an organic EL display, which displays various information, and an operation unit, such as a touch panel, a mouse, or a keyboard, which accepts operations. The display unit displays a map of a predetermined area including the field which is a work target, a predetermined information associated with the work vehicle 10, and the like. The predetermined information includes at least one of information associated with a current peripheral environment of the work vehicle 10, information associated with a current travel status of the work vehicle 10, and information associated with a current work status of the work vehicle 10. The operator is able to grasp the travel state of the work vehicle 10 which is autonomously traveling in the field, on a road, or the like, the result of detection of the obstacle, and the like, from a location away from the work vehicle 10 based on the predetermined information which are displayed on the operation terminal 20. That is, the operator is able to remotely monitor the work vehicle 10 by using the operation terminal 20.

Furthermore, the display unit displays an operation screen which can issue to the work vehicle 10 a travel starting instruction, a travel stopping instruction, a travel restarting instruction, and the like. The display unit also displays a registration screen which can register a work vehicle information, a field information, a work information, and the like.

The storage unit 22 is a non-volatile storage unit, such as an HDD, an SSD, a flash memory, or the like, which stores various types of information. The storage unit 22 stores a control program for causing the operation control unit 21 to execute various types of processes. For example, the control program is non-transitorily recorded in a computer-readable recording medium such as the CD, the DVD, or the like, read out by a predetermined reading device (not shown), and then stored in the storage unit 22. Note that the control program may be downloaded from the server (not shown) to the operation terminal 20 via the communication network N1 and stored in the storage unit 22.

Furthermore, the storage unit 22 stores data such as a work vehicle information, which is information associated with the work vehicle 10, and a target route information, which is information associated with the target route. The work vehicle information includes information such as a vehicle number, a type, and the like, for each work vehicle 10. The vehicle number refers to an identification information of the work vehicle 10. The type refers to a model of the work vehicle 10. Note that the storage unit 22 may either store the work vehicle information associated with a single work vehicle 10 or store the work vehicle information associated with a plurality of work vehicles 10. In the present embodiment, the storage unit 22 stores the work vehicle information respectively associated with the two work vehicles 10a and 10b.

The target route information includes information such as a route name, a field name, an address, a field area, a work time, and the like, for each target route. The route name refers to a route name of the target route generated at the operation terminal 20. The field name refers to a name of the field of the work target to which the target route is set. The address refers to an address of the field, and the field area is an area of the field. The work time refers to a time necessary for the work vehicle 10 to work in the field.

When the target route is a route corresponding to a road (inter-field route), the target route information includes information such as a route name, an address, a travel distance, and a travel time. The route name refers to a name of the road, and the address refers to an address of the road. The travel distance refers to a distance through which the work vehicle 10 travels on the road, for example, a distance between a first field and a second field. The travel time refers to a time during which the work vehicle 10 travels on the road, for example, a time necessary for the work vehicle 10 to move from the first field to the second field.

Note that the storage unit 22 may either store the target route information associated with a single target route or store the target route information associated with a plurality of target routes. For example, when the operator generates a plurality of target routes for one or more fields that the operator manages, the target route information associated with each target routes are stored in the storage unit 22. Note that, for a single field, either a single target route may be set or a plurality of target routes may be set. In addition, for a group of fields, either a single inter-field route may be set or a plurality of inter-field routes may be set. In the present embodiment, the storage unit 22 stores a target route information corresponding to the target route on which the work vehicle 10a travels in the first field, and a target route information corresponding to the target route on which the work vehicle 10b travels in the second field.

In an alternative embodiment, some or all of the information such as the work vehicle information and the target route information may be stored in a server accessible from the operation terminal 20. Alternatively, at the server (such as a personal computer or a cloud server, for example), the operator may perform operations to register the work vehicle information and the target route information. In this case, the operation control unit 21 may acquire the information from the server to execute various processes.

The operation control unit 21 includes control devices such as a CPU, a ROM, and a RAM. The CPU is a processor which executes various types of arithmetic processing. The ROM is a non-volatile storage unit which stores in advance control programs such as a BIOS and an OS for causing the CPU to execute the various types of the arithmetic processing. The RAM is a volatile or non-volatile storage unit which stores various types of information, and is used as a transitory storage memory (work area) for various types of processing executed by the CPU. The operation control unit 21 controls the operation terminal 20 by causing the CPU to execute various types of control programs which are stored in advance in the ROM or the storage unit 22.

As shown in FIG. 1, the operation control unit 21 includes various processing units such as a setting processing unit 211, a display processing unit 212, and an acceptance processing unit 213. Note that the operation control unit 21 functions as the various processing units by causing the CPU to execute various processing according to the control programs. Furthermore, some or all of the processing units may be configured by electronic circuits. Note that the control programs may be programs for causing a plurality of processors to function as the processing units.

The setting processing unit 211 sets information associated with the work vehicle 10 (hereinafter, referred to as "work vehicle information"), information associated with the field (hereinafter, referred to as "field information"), and information associated with how to specifically perform the work (hereinafter, referred to as "work information").

Specifically, after the operator performs operations to register in the operation terminal 20 information such as the model of the work vehicle 10, the position where the positioning antenna 174 is mounted on the work vehicle 10, the type of the work machine 14, the size and shape of the work machine 14, the position of the work machine 14 with respect to the work vehicle 10, the vehicle speed and engine speed of the work vehicle 10 while the work vehicle 10 is working, and the vehicle speed and engine speed while the work vehicle 10 is turning, the setting processing unit 211 sets the information.

Furthermore, after the operator performs operations to resister in the operation terminal 20 information such as the position and the shape of the field, the work start position (travel start position) where the work starts, the work end position (travel end position) where the work ends, the work direction, and the like, the setting processing unit 211 sets information.

The information associated with the position and the shape of the field can be automatically acquired by, for example, the operator getting on the work vehicle 10 and driving one lap along an outer periphery of the field so as to go around the field, and recording the change in the position information of the positioning antenna 174 at that time. Otherwise, the position and the shape of the field may be acquired based on a polygon obtained by the worker operating the operation terminal 20 to designate a plurality of points on a map with the map being displayed on the operation terminal 20.

Furthermore, the setting processing unit 211 can be configured to set, as the work information, a presence or absence of cooperative work between work vehicles 10 (unmanned tractors) and manned work vehicles 10, a skip count which is the number of work routes to be skipped in a case where the work vehicle 10 turns in a headland, a width of the headland, a width of non-cultivated land, and the like.

In addition, the setting processing unit 211 generates the target route for causing the work vehicle 10 to autonomously travel in the field based on the setting information. Specifically, the setting processing unit 211 generates the target route in the field based on the travel start position and the travel end position which are registered in the field settings. For example, the setting processing unit 211 generates the target route including the travel start position, the travel end position, straight routes, and turning routes based on the setting operations performed by the operator. The setting processing unit 211 registers the generated target route in association with the field.

The display processing unit 212 causes the operation display unit 23 to display various information. Specifically, the display processing unit 212 causes a selection screen P1 to display the work vehicle 10 registered in advance so that the operator can select the work vehicle 10. For example, when the operator registers the work vehicle 10a and the work vehicle 10b which are monitoring targets (management targets), the display processing unit 212 causes the selection screen P1 to display the work vehicle 10a and the work vehicle 10b selectably. The work vehicles 10 displayed on the selection screen P1 may be either the work vehicle 10 whose information is registered in the operation terminal 20, or the work vehicle 10 which is selected by the operator among the plurality of registered work vehicles 10 in order to start working from now.

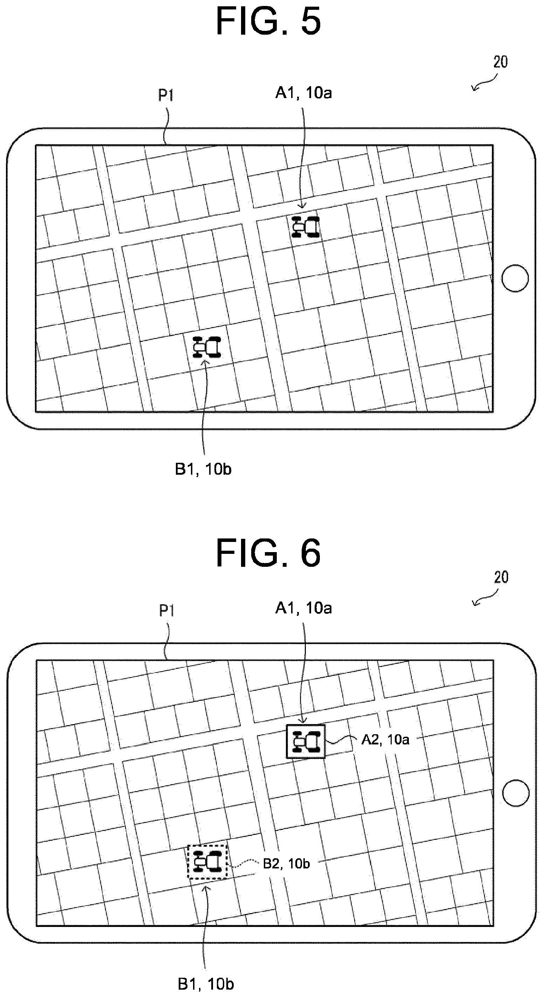

FIG. 5 shows an example of the selection screen P1. As shown in FIG. 5, the display processing unit 212 causes the selection screen P1 to display a map of a predetermined area encompassing respective current positions of the work vehicle 10a and the work vehicle 10b which are registered in advance. Furthermore, the display processing unit 212 causes the selection screen P1 to display identification information of the work vehicles 10 at positions on the map, which corresponds to the current positions of the work vehicles 10. Specifically, as shown FIG. 5, the display processing unit 212 causes the selection screen P1 to display an icon image A1 of the work vehicle 10a at a position on the map, which corresponds to the current position of the work vehicle 10a, and an icon image B1 of the work vehicle 10b at a position on the map, which corresponds to the current position of the work vehicle 10b. The display processing unit 212 acquires position information (positioning information) from the work vehicles 10 and causes the selection screen P1 to display icon images of the work vehicles 10 on the map. The display processing unit 212 updates the positions of the icon images on the map in a real time manner. In an alternative embodiment, the display processing unit 212 may cause the selection screen P1 to display the name of the work vehicle 10a (text information) on the map instead of the icon image.

Alternatively, the display processing unit 212 may cause the selection screen P1 to display the icon image A1 of the work vehicle 10a and the icon image B1 of the work vehicle 10b identifiably. For example, the display processing unit 212 may cause the selection screen P1 to display the name of the work vehicle 10a in the vicinity of the icon image A1, and may cause the selection screen P1 to display the name of the work vehicle 10b in the vicinity of the icon image B1. Furthermore, the display processing unit 212 may cause the selection screen P1 to display the identification information (such as the name) of the work vehicle 10a when the operator performs a touch operation or a mouseover operation to the icon image A1, and to display the identification information (such as the name) of the work vehicle 10b when the operator performs a touch operation or a mouseover operation to the icon image B1.

Furthermore, the display processing unit 212 may cause the selection screen P1 to display the map in an enlarged manner or in a reduced manner according to an operation which enlarges or reduces the map. Alternatively, the display processing unit 212 may automatically adjust the display magnification according to the position of the work vehicle 10 which is the monitoring target. For example, the display processing unit 212 may chose the display magnification of the map such that the icon images of all of the work vehicles 10 which are the monitoring targets are present on a single screen (the same page).

According to the selection screen P1 shown in FIG. 5, the operator can grasp the current positions of all of the work vehicles 10 which are the monitoring targets. Note that the display processing unit 212 may be configured either to cause the selection screen P1 to display the work vehicles 10 which are nonworking and are currently stored in a storage location (such as a warehouse), or not to cause the selection screen P1 to display the work vehicles 10 which are nonworking and are currently stored in the storage location. Also, the operator may set whether or not to cause the selection screen P1 to display the work vehicle 10 which are nonworking and are currently stored in a storage location.

Furthermore, the display processing unit 212 causes the selection screen P1 to display identification information on the map in a display mode according to the current state of the work vehicle 10. Specifically, the display processing unit 212 causes the selection screen P1 to display an icon image on the map so that whether the work vehicle 10 is autonomously traveling or stopping is distinguishable. That is, the display processing unit 212 causes the selection screen P1 to display the work vehicle 10 on the map in a different mode between during the autonomous travel of the work vehicle 10 and during the stoppage of the work vehicle 10.

In an example shown in FIG. 6, if the work vehicle 10a is stopping, the display processing unit 212 causes the selection screen P1 to display the icon image A1 in a mode indicating that the work vehicle 10a is stopping. On the other hand, if the work vehicle 10b is autonomously traveling, the display processing unit 212 causes the selection screen P1 to display the icon image B1 in a mode indicating that the work vehicle 10b is autonomously traveling.

Note that the display mode may be either made of a type, a color, or a thickness of a line of a frame image surrounding the icon image, or made of a color, a size, or display method (illumination or flashing) of the icon image, etc. For example, as shown in FIG. 6, the display processing unit 212 causes the selection screen P1 to display a frame image A2 of the icon image A1 and a frame image B2 of the icon image B1 in the display modes distinct from each other.

In an alternative embodiment, the display processing unit 212 may causes the selection screen P1 not to display the frame image while the work vehicle 10 normally autonomously travels, and to display the frame image while the work vehicle 10 stops autonomously traveling.

Furthermore, the display processing unit 212 may cause the selection screen P1 to display a message (text information) in the vicinity of the icon image A1, which says that the work vehicle 10 is stopping, and to display a message in the vicinity of the icon image B1, which says that the work vehicle 10 is autonomously traveling. Alternatively, the display processing unit 212 may cause the selection screen P1 to display a message saying that the work vehicle 10 is stopping when the operator performs a touch operation or a mouseover operation to the icon image A1, and to display a message saying that the work vehicle 10 is autonomously traveling when the operator performs the touch operation or the mouseover operation to the icon image B1.

Note that the work vehicle 10 stops autonomously traveling at the times, for example, when a detection target (obstacle) is detected, when the work is finished, when the remaining amount of the spread material or the fuel becomes less than a predetermined amount, when the yield of crops becomes not less than a predetermined amount, when a regeneration work of a Diesel Particulate Filter (DPF) is required, when a supplying work of urea water is required, and the like.

Alternatively, the display processing unit 212 may cause the selection screen P1 to display identification information to make the work state identifiable. For example, when the work vehicle 10a finishes the work in the field which is the work target, the display processing unit 212 cause the selection screen P1 to illuminates or flashes the icon image A1, or to display the frame image A2 of the icon image A1 in a predetermined color. Furthermore, for example, in a case where the work vehicle 10a is a vehicle (dispersion machine) which disperses a spray material (such as a chemical liquid or water), when the amount of spray material remaining in the work vehicle 10a becomes less than the regulated amount, or when a supplying timing of the spray material arrives, the display processing unit 212 cause the selection screen P1 to illuminate or flash the icon image A1, or to display the frame image A2 of the icon image A1 in the predetermined color. Moreover, for example, in a case where the work vehicle 10a is a vehicle (such as a combine harvester) which harvests crops, when the yield of the crops becomes not less than the regulated amount, or when a discharge timing of the crops arrives, the display processing unit 212 causes the selection screen P1 to illuminate or flash the icon image A1, or to display the frame image A2 of the icon image A1 in the predetermined color.

In this way, when the work vehicle 10 stops autonomously traveling, the display processing unit 212 may cause the selection screen P1 to display the stop state of the work vehicle 10 identifiably, and when the work vehicle 10 stops autonomously traveling, the display processing unit 212 may cause the selection screen P1 to display identification information so that the cause of the stoppage of the work vehicle 10 can be specified.

According to the selection screen P1 shown in FIG. 6, the operator is able to grasp the current state of each of the work vehicles 10 which are the monitoring targets.

Here, the display processing unit 212 causes the selection screen P1 to display the work vehicle 10 selectably (see FIGS. 5 and 6). Specifically, the display processing unit 212 causes the selection screen P1 to display the icon images A1 and B1 on the map selectably. The acceptance processing unit 213 accepts selection operations of the icon images on the selection screen P1, which is performed by the operator. For example, when the operator touches the icon image A1 of the work vehicle 10a displayed on the selection screen P1 with a finger, the acceptance processing unit 213 accepts the touch operation. For example, when the operator sees the selection screen P1 to grasp that the work vehicle 10a stops autonomously traveling, the operator touches the icon image A1 of the work vehicle 10a in order to confirm the cause of the stoppage.

The display processing unit 212 causes the operation display unit 23 to display predetermined information associated with the work vehicle 10 which is selected by the operator. Specifically, the display processing unit 212 causes an information display screen P2 (a second screen of the present disclosure) to display the predetermined information. The predetermined information includes at least one of information including the information associated with a current peripheral environment of the work vehicle 10, the information is associated with a current travel status of the work vehicle 10, and the information associated with a current work status of the work vehicle 10. For example, as shown in FIG. 7A, when the operator selects the icon image A1 of the work vehicle 10a, the display processing unit 212 causes the information display screen P2 to display the captured image of the periphery of the work vehicle 10a captured by the camera 53 mounted on the work vehicle 10a. Here, the display processing unit 212 acquires a front image, a rear image, a left side image, and a right side image of the work vehicle 10a from the camera 53, and causes the information display screen P2 to display those images. In addition, as shown in FIG. 7A, the display processing unit 212 causes the information display screen P2 to display the front image on the upper side of the information display screen P2, and to display the rear image, the left side image, and the right side image on the lower side of the information display screen P2. In an alternative embodiment, as shown in FIG. 7B, the display processing unit 212 may cause the information display screen P2 to display the front image on the lower side of the information display screen P2, and to display the rear image, the left side image, and the right side image on the upper side of the information display screen P2. Also, it may be possible for the operator to set (customize) the arrangement, the size, display/non-display of each images.

Furthermore, when the work vehicle 10a detects the detection target, the display processing unit 212 may cause the information display screen P2 to display identifiably the captured image including the detection target among the plurality of captured images acquired from the camera 53. For example, when the obstacle sensor 54 mounted on the work vehicle 10a detects the detection target forward the work vehicle 10a, as shown in FIG. 7A, the display processing unit 212 causes the information display screen P2 to display the front image in an emphasized manner.

In this way, the display processing unit 212 causes the selection screen P1 to display the icon image of each of the plurality of the work vehicles 10 registered in advance on the map in a display mode corresponding to the current state of the work vehicle 10 (see FIG. 6), and causes the information display screen P2 to display the captured images of the periphery of the work vehicle 10 captured by the camera 53 mounted on the work vehicle 10 corresponding to the icon image which is selected by the operator from among the plurality of icon images on the selection screen P1 (see FIG. 7A).

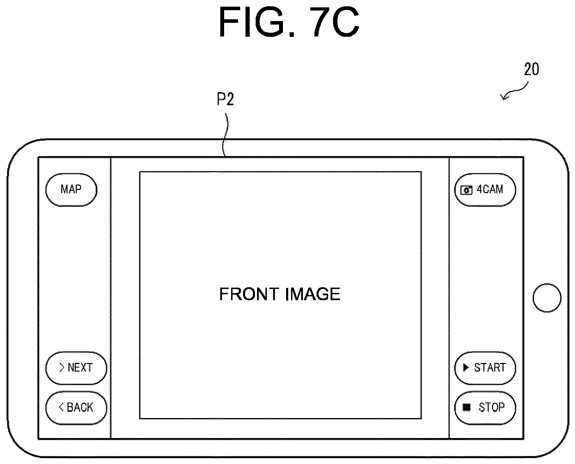

Moreover, the display processing unit 212 causes the information display screen P2 to display switching buttons (a "NEXT" button and a "BACK" button) which switch the display screen. When the operator touches the "NEXT" button once, the display processing unit 212 causes the information display screen P2 to display the front image in an enlarged manner (see FIG. 7C). Subsequently, when the operator touches the "NEXT" button once again, the display processing unit 212 causes the information display screen P2 to display the right side image in the enlarged manner, when the operator touches the "NEXT" button once more again, the display processing unit 212 causes the information display screen P2 to display the rear image in the enlarged manner, and when the operator touches the "NEXT" button further once more again, the display processing unit 212 causes the information display screen P2 to display the left side image in the enlarged manner. The display processing unit 212 switches to cause the information display screen P2 to display the front image, the right side image, the rear image, and the left side image in this order every time the operator touches the "NEXT" button. Moreover, the display processing unit 212 switches between the front image, the left side image, the rear image, and the right side image in this order every time the operator touches the "BACK" button. In addition, when the operator touches the "4CAM" button on the information display screen P2 shown in FIG. 7C, the display processing unit 212 causes the information display screen P2 to display the captured images in the four directions (the front image, the rear image, the left side image, and the right side image) (see FIG. 7A).

The display processing unit 212 may enable the information display screen P2 to change (zoom) the display magnification (visual field size) of the captured image as shown in FIGS. 7A to 7C. For example, on the information display screen P2 shown in FIG. 7C, when the operator performs an enlarging operation (pinch out), the display processing unit 212 causes the information display screen P2 to display the front image in the enlarged (zoomed-in) manner, and when the operator performs a reducing operation (pinch in), the display processing unit 212 causes the information display screen P2 to display the front image in a reduced (zoomed-out) manner. Alternatively, the display processing unit 212 may change the capture range (capture direction) of the camera 53 according to an operation by the operator.

In addition, the display processing unit 212 may cause the information display screen P2 either to display the detected detection target so as to emphasized by surrounding the detection target with a frame image in the captured image, or to track the detection target. Furthermore, the display processing unit 212 may cause the information display screen P2 to display information associated with the distance to the detected detection target and information associated with the type of the detection target (a person, a vehicle, a structure, a material, and the like). Note that the camera 53 may be disposed so that a part of the vehicle body of the work vehicle 10 is inside a camera view in order to easily grasp a visual distance to the detected detection target.

Furthermore, the display processing unit 212 causes the information display screen P2 to display a "START" button and a "STOP" button. When the operator touches the "START" button, the acceptance processing unit 213 accepts the operation, and outputs an instruction to start or restart autonomously traveling to the work vehicle 10. For example, when the work vehicle 10a detects the detection target to stop autonomously traveling, the operator selects the work vehicle 10a on the selection screen P1. After confirming the safety of the work vehicle 10a on the information display screen p2, the operator touches the "START" button on the information display screen p2. This allows the acceptance processing unit 213 to output an instruction to cause the work vehicle 10a to restart autonomously traveling, so that the work vehicle 10a restarts autonomously traveling according to the instruction. In an alternative embodiment, the acceptance processing unit 213 may allow the touching operation of the "START" button on condition that the detection target is no longer detected.

Furthermore, for example, while the work vehicle 10b is autonomously traveling, when the operator selects the work vehicle 10b on the selection screen P1 and touches the "STOP" button on the information display screen P2, the acceptance processing unit 213 outputs an instruction to stop autonomously traveling to the work vehicle 10b. This allows the work vehicle 10b to stop autonomously traveling according to the instruction.

Note that when the operator touches the "MAP" button on the information display screen P2, the display processing unit 212 switches the information display screen P2 to the selection screen P1 (see FIGS. 5 and 6). In this way, the operator is able to switch the selection screen P1 and the information display screen P2 mutually.

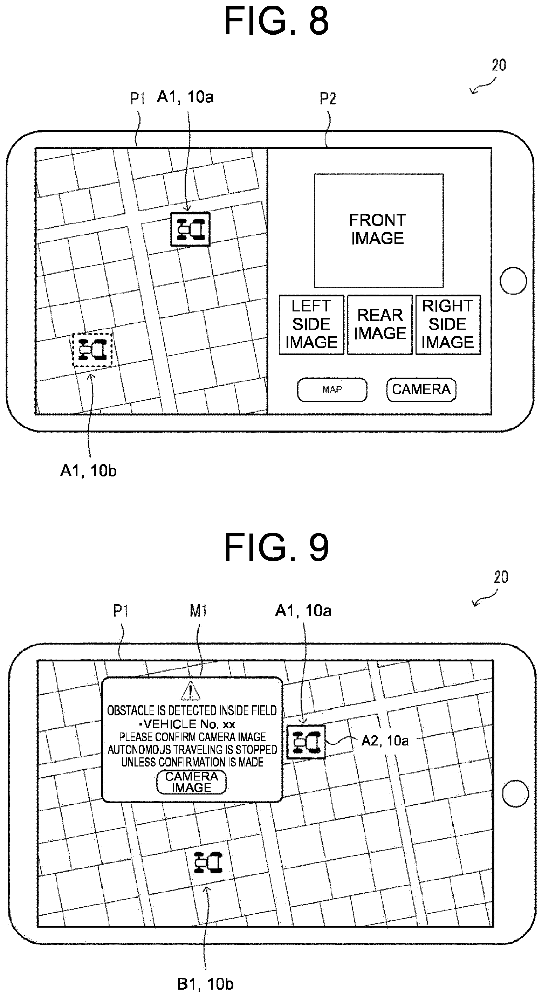

In an alternative embodiment, the display processing unit 212 may cause the operation display unit 23 to display the selection screen P1 and the information display screen P2 side by side in the left-right direction or the up-down direction. For example, as shown in FIG. 8, the display processing unit 212 causes the operation display unit 23 to display the selection screen P1 on the left side in a display area, to display the information display screen P2 on the right side in the display area, which corresponds to the work vehicle 10a which is selected on the selection screen P1. Furthermore, when the operator touches the "MAP" button on the information display screen P2 shown in FIG. 8, the display processing unit 212 causes the operation display unit 23 to display the selection screen P1 in a full-screen manner (see FIG. 6), and when the operator touches the "CAMERA" button, the display processing unit 212 causes the operation display unit 23 to display the information display screen P2 in the full-screen manner (see FIG. 7A). Note that the display processing unit 212 may cause the operation display unit 23 to display the front image on the lower side in the information display screen P2, and to display the rear image, the left side image, and the right side image on the upper side in the information display screen P2. Also, it may be possible for the operator to set (customize) the arrangement, the size, display/non-display of each images.

Other, the operation control unit 21 issues an autonomous travel instruction to the work vehicle 10. For example, when the operator selects the field and touches a start button (not shown) at starting autonomously traveling, the operation control unit 21 outputs the route data of the target route to the work vehicle 10. Once the route data generated in the operation terminal 20 is transmitted to the work vehicle 10, the work vehicle 10 stores the route data in the storage unit 12. The work vehicle 10 executes the autonomous travel processing based on the route data while detecting the current position of the work vehicle 10 using the positioning antenna 174. Note that the current position of the work vehicle 10 normally coincides with the position of the positioning antenna 174.

The work vehicle 10 is also configured to perform the autonomous travel when the current position coincides with the travel start position or is inside a predetermined range around the travel start position in the field (when an autonomous travel start condition is met). If the start condition is met and the operator touches the start button on an operation screen (not shown) to issue the travel start instruction, the travel processing unit 111 causes the work vehicle 10 to start autonomously traveling along the target route.

Note that the setting processing in the setting processing unit 211 mentioned above, and the processing to cause the work vehicle 10 to start autonomously traveling by the operation control unit 21 may be executed by a device distinct from the operation terminal 20. For example, the operator may perform operations such as a setting operation of the various setting information, a generation operation of the target route, and an instruction operation of the autonomous travel, using a tablet terminal distinct from the operation terminal 20. In this case, the operation terminal 20 serves only as a monitoring function to monitor the work vehicle 10, and the tablet terminal may execute the setting processing of the various setting information, the generation processing of the target route, the autonomous travel processing, and the like. Alternatively, the operation terminal 20 according to the present embodiment may be realized by adding the monitoring function to the tablet terminal. In an alternative embodiment, the operation control unit 21 may cause devices different from each other to display the selection screen P1 and the information display screen P2, respectively. For example, the operation control unit 21 may cause the operation terminal 20 to display the selection screen P1, and cause a device distinct from the operation terminal 20 (such as the tablet terminal, or a mobile terminal of the operator or worker) to display the information display screen P2.

Note that the operation terminal 20 may be accessible to a website of an agricultural support service (agricultural support site) provided by a server (not shown) via the communication network N1. In this case, by the operation control unit 21 executing a browser program, it is possible for the operation terminal 20 to function as an operation terminal of the server. Whereby the server includes the processing units mentioned above, and performs the each processing.

Hereinafter, specific examples of the treating process executed in the work vehicle 10 and the operation terminal 20 are described.

As mentioned above, when a detection target (obstacle) is detected, the detection control unit 51 determines whether or not the detection target is located inside the field F. If the detection target is located inside the field F, the detection control unit 51 further determines whether or not the detection target is located inside the vehicle control range. Then, the detection control unit 51 performs a treating process according to the result of determination (the position of the detection target).

### Specific Example 1 of Treating Process

In a case where the position of the detected detection target is inside the field F, the detection control unit 51 notifies the operation terminal 20 displaying the traveling status of the work vehicle 10 during the autonomous travel of detection information indicating that the detection target is detected (an example of a first treating process). For example, in the example shown in FIG. 4, in a case where the detection target X2 is present inside the field F, when the work vehicle 10 approaches the detection target X2 and the front obstacle sensor 54a detects the detection target X2, the detection control unit 51 outputs detection information (an example of treating information) to the operation terminal 20 and causes the operation terminal 20 to display the detection information. For example, as shown in FIG. 9, when the work vehicle 10a detects a detection target inside the field F, the detection control unit 51 of the work vehicle 10a causes the selection screen P1 of the operation terminal 20 to display a notification message M1 (an example of detection information) saying that the detection target is detected inside the field F.

When the operation control unit 21 of the operation terminal 20 acquires the detection information from the work vehicle 10a which detects the detection target while the current positions and the current status of all the work vehicles 10 to be monitored are displayed on the selection screen P1, the operation control unit 21 of the operation terminal 20 causes the selection screen P1 to display the notification message M1 in a pop-up manner. The notification message M1 includes the vehicle number of the work vehicle 10a which detects the detection target, a confirmation request for a camera image, a switching button ("camera image" button) for switching the selection screen P1 to a camera image, and the like. Note that the operation control unit 21 may cause the operation terminal 20 to reproduce a sound when the detection information is acquired.

In addition, the operation control unit 21 may cause the selection screen P1 to display identification information which makes a detection of the detection target identifiable. For example, when the work vehicle 10a detects the detection target, the operation control unit 21 causes the selection screen P1 to display the icon image A1 in a lighting up or blinking manner, or to display the frame image A2 of the icon image A1 in a predetermined color.

Displaying the notification message M1 on the operation terminal 20 allows the operator (remote monitor) to recognize that the detection target (obstacle) is detected inside the field F.

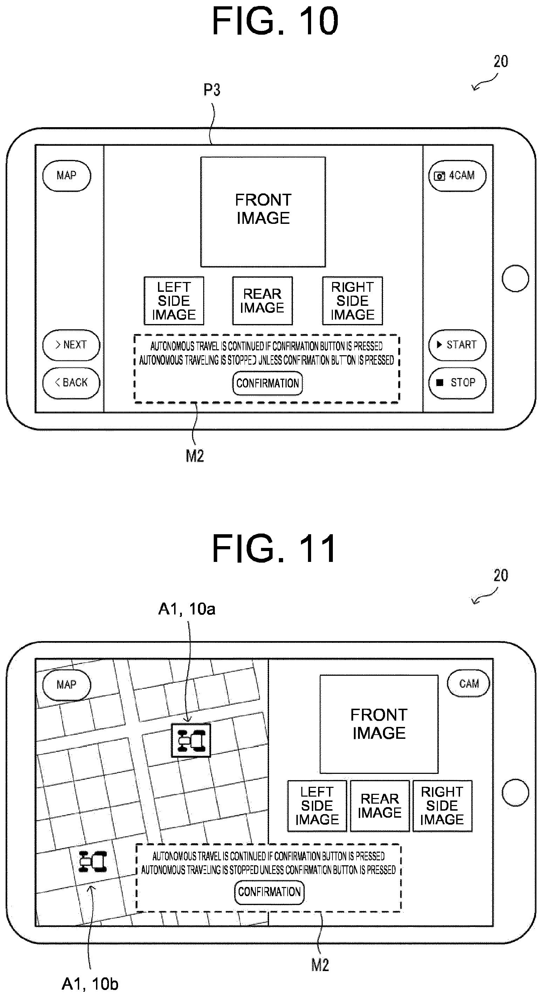

When the operator touches the camera-image-switching button on the selection screen P1, the operation control unit 21 causes the operation terminal 20 to display the camera screen P3 shown in FIG. 10. For example, the operation control unit 21 causes the camera screen P3 to display a camera image (a front image in FIG. 10) capturing the detection target, in the enlarged manner. Furthermore, the operation control unit 21 causes the camera screen P3 to display a confirmation message M2 (an example of the detection information). The confirmation message M2 includes a confirmation request of the detection target, a confirmation button, and the like. The operator confirms the detection target using the camera image and determines whether or not it is safe for the work vehicle 10a to continue autonomously traveling. For example, if the operator determines that it is safe for the work vehicle 10a to continue autonomously traveling, the operator touches the confirmation button, and if the operator determines that it is necessary for the work vehicle 10a to stop autonomously traveling, the operator touches the stopping button ("STOP").

Moreover, the detection control unit 51 acquires the operation content of the operator responding to the notification message M1 and the confirmation message M2 and executes predetermined processes. For example, when the operator touches the confirmation button of the confirmation message M2, the detection control unit 51 outputs a continuing instruction to continue autonomously traveling to the vehicle control device 11. Note that the detection control unit 51 may be configured to output no instructions to the vehicle control device 11 in the case of causing the work vehicle 10a to continue autonomously traveling.

In contrast, for example, in a case where the operator does not touch the switching button ("camera image" button) until a predetermined time elapses after the notification message M1 (see FIG. 9) is displayed, or in a case where the operator does not touch the confirmation button until a predetermined time elapses after the confirmation message M2 (see FIG. 10) is displayed, the detection control unit 51 outputs a stopping instruction to stop autonomously traveling to the vehicle control device 11.

Once the vehicle control device 11 acquires the stopping instruction, the vehicle control device 11 causes the work vehicle 10a to stop autonomously traveling. In this case, the operation control unit 21 may cause the selection screen P1 to display the frame image A2 of the icon image A1 of the work vehicle 10a in a different color which indicates that the work vehicle 10a is stopping.

In this way, when the detection control unit 51 detects the detection target inside the field, the detection control unit 51 notifies the operator of the result of detection to prompt the operator to confirm the detection target using the camera image. If the detection control unit 51 can obtain the confirmation of the operator, it causes the work vehicle 10a to continue autonomously traveling, and if the detection control unit 51 cannot obtain the confirmation of the operator, it causes the work vehicle 10a to stop autonomously traveling.

Note that it may be possible to set a condition for resuming autonomously traveling after the stoppage of the work vehicle 10a. For example, the vehicle control device 11 may set any of the operation terminal 20 of a remote monitor and a remote controller for the assistant (short-distance monitor) to perform a short-distance operation of the work vehicle 10a to permit the restart operation of autonomous traveling, may set only the remote controller to permit the restart operation of autonomous traveling, or may set only a main machine (work vehicle 10) to permit the restart operation of autonomous traveling while prohibiting the restart operation of autonomous traveling by any of the operation terminal 20 and the remote controller. In addition, in a case where the vehicle control device 11 permits only the remote controller or the main machine to perform the restart operation of autonomous traveling, the remote monitor (the operation terminal 20) may prompt the assistant (the assistant terminal or the like) to perform the restart operation of autonomous traveling.

In an alternative embodiment, when the detection control unit 51 detects the detection target, as shown in FIG. 11, the detection control unit 51 may cause a screen on which the map and the camera image are displayed to display the confirmation message M2.

In an alternative embodiment, the detection control unit 51 may cause a map screen (selection screen P1) displayed on the operation terminal 20 to display at least one of the position of the detection target and the camera image in which the detection target is captured. Furthermore, the detection control unit 51 may cause the work vehicle 10 to resume or continue autonomously traveling on condition that the operator performs on the map screen the operation of confirming at least one of the position of the detection target and the camera image. In addition, the detection control unit 51 may cause the map screen or the like to display the date and time when the detection target is detected.

In an alternative embodiment, when the detection target is detected inside the field F while the selection screen P1 (see FIGS. 5 and 6) is displayed on the operation terminal 20, the detection control unit 51 may switch the selection screen P1 to the camera screen P3 (see FIG. 10) to cause the camera screen P3 to display the confirmation message M2 regardless of the operation by the operator.

### Specific Example 2 of Treating Process

When the detected detection target is located inside the field F and is located within the vehicle control range (the stop control range Ra, the deceleration control range Rb, and the sounding control range Rc), the detection control unit 51 further outputs a vehicle control instruction to the vehicle control device 11 in addition to the process of notifying the operation terminal 20 of the detection information (an example of a second treating process). For example, in the example shown in FIG. 4, in a case where the detection target X3 is present inside the field F, if the work vehicle 10a approaches the detection target X3 and the front obstacle sensor 54a detects the detection target X3 in the stop control range Ra, the detection control unit 51 outputs the detection information to the operation terminal 20 to cause the operation terminal 20 to display the detection information, and outputs the stopping instruction to the vehicle control device 11 to cause the work vehicle 10 to stop autonomously traveling. Note that in a case where the detection control unit 51 detects the detection target X3 inside the deceleration control range Rb, the detection control unit 51 outputs the decelerating instruction to the vehicle control device 11 to decelerate the work vehicle 10. Alternatively, in a case where the detection target X3 is detected inside the sounding control range Rc, the detection control unit 51 outputs the sounding instruction to the vehicle control device 11 to cause the work vehicle 10 to issue (sound) an alarm therefrom.

Furthermore, when the detection target X3 is detected inside the vehicle control range, the detection control unit 51 may omit the process of causing the selection screen P1 to display the notification message M1 (see FIG. 9) and switch the selection screen P1 to the camera screen P3 to cause the camera screen P3 to display the confirmation message M2 (see FIG. 10) because there is a possibility that the work vehicle 10 collides with the detection target (obstacle).

When the operator touches the confirmation button of the confirmation message M2 on the camera screen P3, the detection control unit 51 outputs a continuing instruction to continue autonomously traveling to the vehicle control device 11. In a case where the detection target is detected inside the stop control range Ra and the autonomous travel is stopped, when the operator touches the confirmation button of the confirmation message M2, the detection control unit 51 outputs the restart instruction of the autonomous travel to the vehicle control device 11. Alternatively, in a case where the detection target is detected inside the deceleration control range Rb and the work vehicle 10 is decelerated, when the operator touches the confirmation button of the confirmation message M2, the detection control unit 51 outputs a returning instruction (accelerating instruction) to return the vehicle speed to an original setting speed to the vehicle control device 11.

In a case where the confirmation button is not touched until a predetermined time elapses after the confirmation message M2 (refer to FIG. 10) is displayed, the detection control unit 51 outputs the stopping instruction to stop autonomously traveling to the vehicle control device 11.

In this way, when the detected detection target is located within the field F, the detection control unit 51 executes a treating process to notify the operation terminal 20 of the detection information (an example of the first treating process), and further when the detected detection target is located inside the vehicle control range (the stop control range Ra, the deceleration control range Rb, and the sounding control range Rc), the detection control unit 51 executes a treating process including a process to notify the operation terminal 20 of the detection information and a process to control (travel control or sounding control) the work vehicle 10 during the autonomous travel (an example of a second treating process). In addition, when the detection target detected by the obstacle sensor 54 while the work vehicle 10 is autonomously traveling in the field F is located within the field F, the detection control unit 51 executes treating processes which are different from each other depending on whether the detection target is located inside the vehicle control range or outside the vehicle control range.

Note that the operation control unit 21 may cause the selection screen P1 to display the icon image A1 or the frame image A2 in a display mode according to the position where the work vehicle 10a detects the detection target. For example, the operation control unit 21 causes the selection screen P1 to display the frame image A2 in green when the work vehicle 10a detects the detection target inside the sounding control range Rc. The operation control unit 21 causes the selection screen P1 to display the frame image A2 in yellow when the work vehicle 10a detects the detection target inside the deceleration control range Rb. The operation control unit 21 causes the selection screen P1 to display the frame image A2 in red when the work vehicle 10a detects the detection target inside the stop control range Ra.

### Specific Example 3 of Treating Process

The detection control unit 51 notifies the operation terminal 20 of the detection information when the detected detection target is located outside the field F and in the periphery of the field F, and the detection control unit 51 does not notify the operation terminal 20 of the detection information when the detected detection target is located outside the field F and in the non-periphery of the field F.

For example, when the detection control unit 51 detects the detection target X1 (see FIG. 4) located in another field adjacent to the field F and in the vicinity of a boundary with the other field, the detection control unit 51 notifies the operation terminal 20 of the detection information.

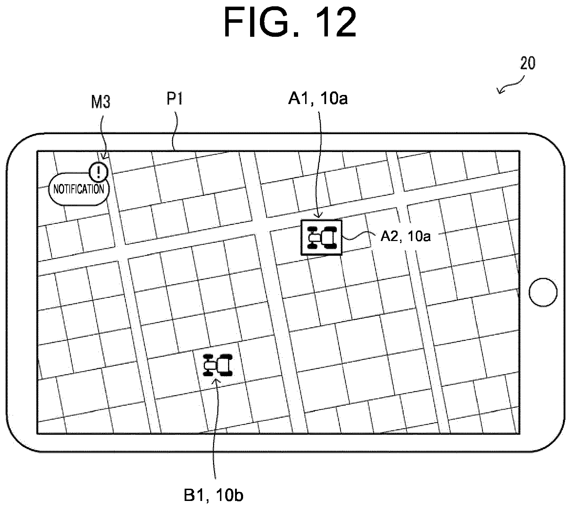

Furthermore, as shown in FIG. 12, the detection control unit 51 causes the selection screen P1 to display a notification mark M3 (an example of detection information) indicating that the detection target located outside the field is detected. In this case, once the operator touches the notification mark M3, the detection control unit 51 causes the selection screen P1 to display the notification message M1. Note that in a case where the detection target is located outside the field F, the detection control unit 51 does not need to stop the autonomous travel of the work vehicle 10 because there is a small possibility that the work vehicle 10 collides with the detection target. Therefore, even in a case where the detected detection target X1 is positioned in the vehicle control range (the stop control range Ra, the deceleration control range Rb, and the sounding control range Rc) (see FIG. 4), the detection control unit 51 does not output the vehicle control instruction to the vehicle control device 11 to cause the work vehicle 10 to continue autonomously traveling. In an alternative embodiment, in a case where the detected detection target X1 is located outside the field F, the detection control unit 51 may be either configured not to determine whether or not the detection target X1 is located inside the vehicle control range, or configured not to output the vehicle control instruction to the vehicle control device 11.

Furthermore, when the operator performs a confirmation request responding to the notification mark M3 or the notification message M1, the detection control unit 51 may cause the operation terminal 20 to display a camera image in which the detection target detected outside the field F is captured.

Furthermore, the detection control unit 51 may set the measurement range (detection range) of the detection target outside the field F to a range within a predetermined distance away from the outer peripheral end (boundary) of the field F. Alternatively, the detection control unit 51 may set the detection range of the detection target outside the field F to a specific range outside the field F (for example, inside an adjacent field). The detection control unit 51 may be configured to notify the operation terminal 20 of the detection information when the detection control unit 51 detects the detection target insides the detection range, and may be configured not to notify the operation terminal 20 of the detection information when the detection control unit 51 detects the detection target outside the detection range.

In an alternative embodiment, the detection control unit 51 may be configured not to notify the operation terminal 20 of the detection information in a case where the operator confirms the detection target detected outside the field F even when the detection control unit 51 detects the same detection target outside the field F afterward.

As mentioned above, in a case where the detected detection target is located outside the field F, the detection control unit 51 executes a process to notify the operation terminal 20 of the detection information (an example of the first treating process). That is, the detection control unit 51 according to the present embodiment sets the outside of the field F to the detection range not a non-detection range, thereby making it possible to detect the detection target located outside the field F. When the detection control unit 51 detects the detection target outside the field F, the detection control unit 51 executes the notification processing for notifying the operator of the detection of the detection target.

Also, when the detection control unit 51 detects a detection target outside the field F, the detection control unit 51 does not execute the travel control process for stopping or decelerating the autonomous travel of the work vehicle 10 and the sounding process for issuing the alarm from the work vehicle 10, but the detection control unit 51 performs only the notification process to cause the work vehicle 10 to continue autonomously traveling. Note that the detection control unit 51 may execute the notification process and the sounding process when the detection control unit 51 detects the detection target outside the field F. In contrast, as the above-mentioned Example 1, the detection control unit 51 executes the notification process when the detection control unit 51 detects a detection target X2 in the field F, the detection control unit 51 causes the work vehicle 10 to continue autonomously traveling when the confirmation operation is performed by the operator, and the detection control unit 51 causes the work vehicle 10 to stop autonomously traveling when the confirmation operation is not performed by the operator. Furthermore, the detection control unit 51 executes the notification process and the vehicle control process when the detection control unit 51 detects a detection target X3 inside the field F and inside the vehicle control range, the detection control unit 51 causes the work vehicle 10 to continue autonomously traveling when the confirmation operation is performed by the operator, and the detection control unit 51 causes the work vehicle 10 to stop autonomously traveling when the confirmation operation is not performed by the operator. In this way, the detection control unit 51 executes treating processes which are different from each other depending on whether the detected detection target is located inside the field F or outside the field F.

In an alternative embodiment of the specific example 1, the detection control unit 51 may cause the selection screen P1 to delete the notification message M1 and display the notification mark M3 (see FIG. 12) in a case where the operator does not touch the camera-image-switching button until a predetermined time elapses after the detection control unit 51 causes the selection screen P1 to display the notification message M1 (see FIG. 9).

In an alternative embodiment of examples 1 and 2, for instance, when the detection control unit 51 detects the detection target inside the field F while the operation terminal 20 displays the information display screen P2 (see FIG. 7A and the like), the detection control unit 51 may cause the work vehicle 10 which is being displayed on the information display screen P2 to temporarily stop autonomously traveling and switch the information display screen P2 to the camera screen P3 of the camera images of the work vehicle 10, in which the detection target is detected.

### Obstacle Detection Process

Hereinafter, an example of the obstacle detection process executed by the autonomous travel system 1 is described with reference to FIG. 13.

Note that the present disclosure can be recognized as a disclosure related to an obstacle detection method (an example of the control method of the present disclosure) for executing one or more steps included in the obstacle detection process. In addition, one or more steps included in the obstacle detection process described here may be omitted as appropriate. Note that each of the steps in the obstacle detection process may be executed in a different order as long as similar effects can be achieved. Here, an example is given to be described of a case where the detection control unit 51 executes each of the steps in the obstacle detection process, but in alternative embodiment of the obstacle detection method, one or more processors may execute each of the steps in the obstacle detection process in a distributed manner. The detection control unit 51 executes the obstacle detection process when the autonomous travel of the work vehicle 10 is started.

In step S1, the detection control unit 51 determines whether or not the work vehicle 10 detects the detection target (obstacle). The detection control unit 51 determines whether or not the detection target is detected based on the measurement information acquired from the obstacle sensor 54, the captured image acquired from the camera 53, and the like. If the detection target is detected (S1:Yes), the detection control unit 51 moves the process to step S2. To the contrary, if the detection target is not detected (S1:No), the detection control unit 51 moves the process to step S8. The detection control unit 51 executes the determination processing of the detection target while the work vehicle 10 is autonomously traveling.

In step S2, the detection control unit 51 determines whether or not the detected detection target is located inside the field F. Specifically, the detection control unit 51 determines whether the detection target is located inside the field F or outside the field F based on the current position of the work vehicle 10 in the field F and the measurement information. If the detection control unit 51 determines that the detection target is located inside the field F (S2:Yes), the detection control unit 51 moves the process to step S3. To the contrary, if the detection control unit 51 determines that the detection target is located outside the field F (S2:No), the detection control unit 51 moves the process to step S21.

In step S3, the detection control unit 51 determines whether or not the detected detection target is positioned inside the vehicle control range. Specifically, based on the current position of the work vehicle 10 and the measurement information, the detection control unit 51 determines whether the detection target is located inside any of the stop control range Ra, the deceleration control range Rb, and the sounding control range Rc, or is located inside none of the stop control range Ra, the deceleration control range Rb, and the sounding control range Rc. If the detected detection target is located inside the vehicle control range (S3:Yes), the detection control unit 51 moves the process to step S4. To the contrary, if the detection target is located outside the vehicle control range (S3:No), the detection control unit 51 moves the process to step S5.

In step S4, the detection control unit 51 outputs the vehicle control instruction to the vehicle control device 11. For example, in a case where the detected detection target is located inside the sounding control range Rc, the detection control unit 51 outputs the sounding instruction to the vehicle control device 11. For example, in a case where the detected detection target is located inside the deceleration control range Rb, the detection control unit 51 outputs the decelerating instruction to the vehicle control device 11.

For example, in a case where the detected detection target is located inside the stop control range Ra, the detection control unit 51 outputs the stopping instruction to the vehicle control device 11. Subsequent to step S4, the detection control unit 51 moves the process to step S5.

Next, in step S5, the detection control unit 51 outputs detection information indicating that the detection target is detected to the operation terminal 20. For example, as shown in FIG. 9, the detection control unit 51 causes the selection screen P1 of the operation terminal 20 to display the notification message M1 saying that the detection target is detected inside the field F. The operation control unit 21 of the operation terminal 20 causes the selection screen P1 to display the notification message M1 in a pop-up manner, and when the operator touches the camera-image-switching button, the operation control unit 21 causes the operation terminal 20 to display the camera screen P3 shown in FIG. 10 and causes the camera screen P3 to display the confirmation message M2. Subsequent to step S5, the detection control unit 51 moves the process to step S6.

Next, in step S6, the detection control unit 51 determines whether or not the confirmation operation of the operator responding to the confirmation message M2 (see FIG. 10) is accepted in the operation terminal 20.

For example, in the operation terminal 20, if the operator touches the confirmation button until a predetermined time elapses after the confirmation message M2 is displayed on the camera screen P3, the detection control unit 51 determines that the confirmation operation is accepted (S6:Yes), and moves the process to step S7. To the contrary, in the operation terminal 20, if the operator does not touch the confirmation button until the predetermined time elapses after the confirmation message M2 is displayed on the camera screen P3, the detection control unit 51 determines that the confirmation operation is not accepted (S6:No), and moves the process to step S61.

In step S7, the detection control unit 51 outputs a continuing instruction to continue autonomously traveling to the vehicle control device 11. Upon acquiring the continuing instruction, the vehicle control device 11 causes the work vehicle 10 to continue autonomously traveling. Subsequent to step S7, the detection control unit 51 moves the process to step S8.

In step S2 described above, if the detection control unit 51 determines that the detection target is located outside the field F (S2:No), in step S21, the detection control unit 51 outputs the detection information indicating that the detection target is detected to the operation terminal 20. For example, as shown in FIG. 12, the detection control unit 51 causes the selection screen P1 of the operation terminal 20 to display the notification mark M3 indicating that the detection target is detected outside the field F. The operation control unit 21 of the operation terminal 20 causes the selection screen P1 to display the notification mark M3, and when the operator touches the notification mark M3, the operation control unit 21 causes the selection screen P1 to display the notification message M1. Here, the confirmation operation of the operator responding to the detection information is omitted. That is, in a case where the detection control unit 51 detects the detection target outside the field F, the detection control unit 51 notifies the operation terminal 20 of only the detection of the detection target, and causes the work vehicle 10 to continue autonomously traveling. Subsequent to step S21, the detection control unit 51 moves the process to step S8.

In the above-mentioned step S6, if the detection control unit 51 does not accept the confirmation operation of the operator responding to the confirmation message M2 (see FIG. 10) (S6:No), in step S61, the detection control unit 51 outputs the stopping instruction to stop autonomously traveling to the vehicle control device 11. Upon acquiring the stopping instruction, the vehicle control device 11 causes the work vehicle 10 to stop autonomously traveling. Subsequent to step S61, the detection control unit 51 moves the process to step S8.

In step S8, the detection control unit 51 determines whether or not the autonomous travel of the work vehicle 10 is ended. If the detection control unit 51 determines that the autonomous travel of the work vehicle 10 is ended (S8:Yes), the detection control unit 51 finishes the obstacle detection process. To the contrary, if the detection control unit 51 determines that the autonomous travel of the work vehicle 10 is not ended (S8:No), the detection control unit 51 returns the process to step S1. The detection control unit 51 repeatedly executes the above-described process until the autonomous travel of the work vehicle 10 is ended.

As described above, the autonomous travel system 1 according to the present embodiment causes the work vehicle 10 to execute different treating processes depending on whether the detection target detected by the obstacle sensor 54 while the work vehicle 10 autonomously travels in the field F is located inside the field F or located outside the field F. For example, if the detection target is located outside the field F, the autonomous travel system 1 causes the operation terminal 20 capable of displaying the travel situation of the work vehicle 10 during the autonomous travel to execute a first treating process of notifying the operator of the detection information indicating that the detection target is detected. Furthermore, for example, if the detection target is located in the field F, the autonomous travel system 1 causes the operation terminal 20 to execute a second treating process including a notification process for notifying the operation terminal 20 of the detection information, the travel control process for controlling travel of the work vehicle 10 during the autonomous travel, and the sounding process for causing the work vehicle 10 to issue the alarm.

According to the above-mentioned configuration, for example, when the obstacle is detected inside the field F, the autonomous travel system 1 notifies the remote monitor of the detection and causes the work vehicle 10 to continue autonomously traveling on condition that the confirmation operation by the remote monitor is accepted. On the other hand, when the obstacle is detected outside the field F, the autonomous travel system 1 notifies the remote monitor of the detection, but the autonomous travel system 1 causes the work vehicle 10 to continue autonomously traveling regardless of the confirmation operation by the remote monitor. This makes it possible to cause the work vehicle 10 to continue autonomously traveling even when the obstacle is detected outside the field F, thereby preventing a work efficiency from decreasing. In addition, since the autonomous travel system 1 notifies the remote monitor of a notification when the obstacle is detected outside the field F, the remote monitor can grasp the presence of the obstacle even when there is no possibility that the obstacle collides with the work vehicle 10.

Furthermore, the autonomous travel system 1 according to the present embodiment may cause the work vehicle 10 to execute different treating processes depending on whether the detection target which is detected in the field F by the obstacle sensor 54 while the work vehicle 10 is autonomously traveling in the field F is located inside the vehicle control range or located outside the vehicle control range. Specifically, the autonomous travel system 1 causes the work vehicle 10 to execute the first treating process for notifying the operation terminal 20 of the detection information when the detection target is located in the field F, and the autonomous travel system 1 causes the work vehicle 10 to execute a second treating process including the notification process for notifying the operation terminal 20 of the detection information and the travel control process for controlling the travel of the work vehicle 10 during the autonomous travel when the detection target is located in the field F and located inside the vehicle control range.

For example, the work vehicle 10 stops autonomously traveling when the detection target within the field F is located inside the stop control range Ra, decelerates the vehicle speed of the autonomous travel when the detection target within the field F is located inside the deceleration control range Rb, and issues the alarm to the outside from the work vehicle 10 when the detection target within the field F is located inside the sounding control range Rc. Furthermore, when the detection target within the field F is located inside the non-vehicle control range Rn, the work vehicle 10 notifies the operation terminal 20 of the detection information, and cause the operation terminal 20 to display the notification message M1, the confirmation message M2, and the like (see FIGS. 9 to 12).

The operation terminal 20 may accept an operation for selecting a short-distance monitoring mode (first monitoring mode) to permit the autonomous travel of the work vehicle 10 on condition that the operator is present within a predetermined distance away from the work vehicle 10, or a long-distance monitoring mode (second monitoring mode) to permit the autonomous travel of the work vehicle 10 even when the operator is not present within a predetermined distance away from the work vehicle 10. For example, the operator selects the short-distance monitoring mode or the long-distance monitoring mode in advance on the setting screen of the operation terminal 20. In addition, the operator can also change each of monitoring modes after the work vehicle 10 starts autonomously traveling.

In the configuration in which the monitoring mode to be set is selectable, if the long-distance monitoring mode is selected, the detection control unit 51 may to be configured to cause the work vehicle 10 to execute the treating process according to the position of the detection target. Specifically, if the operator selects the long-distance monitoring mode, the detection control unit 51 causes the work vehicle 10 to execute the treating processes described in the specific examples 1 to 3 and the like based on whether or not the detection target is located within the field F and whether or not the detection target is located inside the vehicle control range. To the contrary, if the operator selects the short-distance monitoring mode, as there is no need to notify the operation terminal 20 of the detection information, the detection control unit 51 omits the notification process and causes the work vehicle 10 to execute the vehicle control process.

Meanwhile, when the work vehicle 10a autonomously travels along the inter-field route, it is necessary for the operator to always monitor the traveling conditions of the work vehicle 10a. Accordingly, when the work vehicle 10a starts autonomously traveling along the inter-field route, the operation control unit 21 automatically switches the selection screen P1 to the information display screen P2 (see FIG. 7A) even when the operation control unit 21 does not accept the operation in which the operator selects the work vehicle 10a on the selection screen P1. Here, when the information display screen P2 is displayed on the operation terminal 20 while the work vehicle 10a is autonomously traveling along the inter-field route, for example, in a case where the work vehicle 10b detects the detection target within the field F, it is necessary for the operator to confirm the detection target detected by the work vehicle 10b. Accordingly, upon acquiring the detection information from the work vehicle 10b, the operation control unit 21 of the operation terminal 20 outputs a temporarily stopping instruction to the work vehicle 10a which are autonomously traveling along the inter-field route, and switches the information display screen P2 to the camera screen P3 of the work vehicle 10b to cause the camera screen P3 to display the notification message M1. Upon acquiring the temporarily stopping instruction, the work vehicle 10a may either temporarily stop in situ, or travel to a predetermined place (a roadside, a refuge, or the like) to stop temporarily. In addition, the operator may move the work vehicle 10a to the predetermined place by conducting a remote operation using the operation terminal 20.

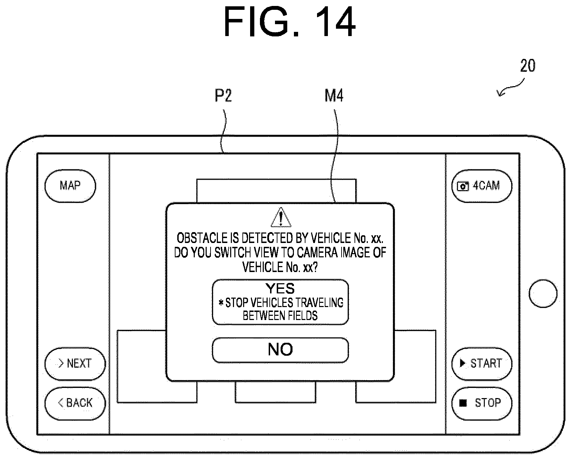

Note that when the work vehicle 10b detects the detection target within the field F while the work vehicle 10a is autonomously traveling along the inter-field route, as shown in FIG. 14, the operation control unit 21 may cause the information display screen P2 to display (pop-up display) information (message M4) indicating that the work vehicle 10b detects the detection target, and cause the information display screen P2 to display a selection button for selecting whether to switch the information display screen P2 to the camera screen P3 displaying the camera image of the work vehicle 10b. Once the operator touches the "YES" button of the message M4, the operation control unit 21 switches the information display screen P2 to the camera screen P3 of the work vehicle 10b.

When the operator confirms the detection target of the work vehicle 10b on the camera screen P3, the operation control unit 21 causes the work vehicle 10b to continue autonomously traveling, returns the camera screen P3 to the information display screen P2 of the work vehicle 10a, and restarts the autonomous travel of the work vehicle 10a along the inter-field route.

In this way, while the operation terminal 20 monitors the autonomous travel of the plurality of work vehicles 10, when the detection target is detected, the operation terminal 20 executes the treating process corresponding to the work vehicle 10 which detects the detection target.

In an alternative embodiment, in a case where the operation control unit 21 of the operation terminal 20 acquires the detection information from each of the plurality of work vehicles 10, the operation control unit 21 may determine the display order or the display method of the plurality of pieces of detection information according to a degree of urgency. For example, the operation control unit 21 displays the plurality of pieces of detection information in a pop-up manner in the descending order of urgency, and when the operator confirms one piece of detection information, the operation control unit 21 displays another piece of detection information having the next highest urgency in a pop-up manner. In addition, the operation control unit 21 may display the pop-up display of the detection information having a high degree of urgency in red, or add a specific symbol (mark) to the pop-up display of the detection information having a high degree of urgency.

In the above-mentioned embodiment, an example is described in which the detection unit to detect the detection target (obstacle) is the obstacle sensor 54 or the camera 53 mounted on the work vehicle 10. However, in an alternative embodiment, the detection unit may be a camera disposed outside the work vehicle 10. For example, the detection unit may be either a camera installed in the field or a camera mounted on a flying object (a helicopter, a drone, or the like) flying over the field. In a case where the detection unit is the camera installed in the field or the camera mounted on the flying object, the entire field may be set as the measurement range of the detection target. In this case, for example, when the detection target X4 (see FIG. 4), which exists at a position (a position outside the measurement range of the obstacle sensor 54) away from the work vehicle 10 during the autonomous travel, is located in the field, the detection control unit 51 outputs detection information indicating that the detection target X4 is detected to the operation terminal 20 to notify the operator of the detection. Thereby, for example, under a remote monitoring environment, the autonomous travel system 1 can be configured to cause the work vehicle 10 to autonomously travel in a state where there is always no detection target (for example, a person) in the field, and configured not to cause the work vehicle 10 to continue autonomously traveling in a state where there is the detection target (a person) in the field.

### Travel Control of Work Vehicle 10

As described in the foregoing, the autonomous travel system 1 controls (notifies, decelerates, or stops) the operation of the work vehicle 10 when the work vehicle 10 detects the detection target in the vehicle control ranges Rd1 and Rd2 in the field (first configuration).

Furthermore, the autonomous travel system 1 causes the selection screen P1 of the operation terminal 20 to display the notification message M1 in the pop-up manner (see FIG. 9) when the work vehicle 10 detects the detection target (for example, the detection targets X2 and X4 shown in FIG. 4) outside the vehicle control ranges Rd1 and Rd2 within the field, and the autonomous travel system 1 causes the work vehicle 10 to stop (or stop autonomously traveling) when the operator does not touch the switch button ("camera image" button) until a predetermined time elapses after the notification message M1 is displayed or when the operator does not touch the confirmation button until the predetermined time elapses after the confirmation message M2 (see FIG. 10) is displayed (second configuration). In an alternative embodiment, the autonomous travel system 1 may cause the work vehicle 10 to stop at the time when the work vehicle 10 detect the detection target outside the vehicle control ranges Rd1 and Rd2 within the field (a third configuration).

Moreover, in an alternative embodiment, regarding the process content to be executed when the work vehicle 10 detects the detection target outside the vehicle control ranges Rd1 and Rd2 within the field, the autonomous travel system 1 may allow the operator to select the second configuration or the third configuration, may automatically select the second configuration or the third configuration according to the type of the work machine or the work content, or may automatically select the second configuration or the third configuration according to the type of the detection target (person, object, attribute of a person (manager, non-manager, etc.)). For example, the autonomous travel system 1 adopts the second configuration when the work vehicle 10 detects a manager outside the vehicle control ranges Rd1 and Rd2 within the field, and adopts the third configuration when the work vehicle 10 detects a non-manager outside the vehicle control ranges Rd1 and Rd2 within the field.

### Sharing of Obstacle Detection Information

When the detection target is detected, the autonomous travel system 1 may cause a plurality of work vehicles 10 to share information associated with the detection target (detection information). Specifically, in a case where a plurality of work vehicles 10 are present in the same field, when the detection target is detected within the field, the autonomous travel system 1 outputs the vehicle control information (a stopping instruction, a decelerating instruction, a sounding instruction, or the like) to all the work vehicles 10 in the field. For example, the autonomous travel system 1 causes all the work vehicles 10 in the field to stop autonomously traveling.

Also, in a case where the work vehicles 10 to be monitored are located in a plurality of fields, respectively, when the detection target is detected in any of the plurality of fields, the autonomous travel system 1 collectively controls all the work vehicles 10 located in the plurality of fields (for example, so as to simultaneously stop autonomously traveling).

In an alternative embodiment, the autonomous travel system 1 may share the detection information with the work vehicles 10 in adjacent fields. For example, in a case where the work vehicles 10 to be monitored is located respectively in the first field and the second field adjacent to each other, when the detection target is detected in the first field, the autonomous travel system 1 causes all the work vehicles 10 to be monitored to stop autonomously traveling.

In an alternative embodiment, the autonomous travel system 1 may share the detection information with the work vehicles 10 in a plurality of fields encompassed in a predetermined range. For example, a second field, which is distant from the first field by a distance less than a predetermined distance, is set as a field with which the detection information is shared, and a third field, which is distant from the first field by a distance not less than the predetermined distance, is excluded from the field with which the detection information is shared. In this case, when the detection target is detected in the first field, the autonomous travel system 1 causes all the work vehicles 10 in the first field and the second field to stop autonomously traveling, and excludes the work vehicle 10 in the third field from the control targets. Note that the operator may either be able to set the field with which the detection information is shared, or be able to set the predetermined range.

In this way, when the first work vehicle 10 detects the detection target while autonomously traveling in the first field (first work area), the autonomous travel system 1 may be configured to cause the first work vehicle 10 to stop autonomously traveling and cause the second work vehicle 10 during the autonomous travel in the second field (second work area) to stop autonomously traveling.

In an alternative embodiment, the autonomous travel system 1 may share the detection information with a plurality of work vehicles 10 positioned in a predetermined range. For example, the second work vehicle 10, which is distant from the first work vehicle 10 by a distance less than a predetermined distance, is set as a work vehicle 10 with which the detection information is shared, and a third work vehicle, which is distant from the first work vehicle 10 by a distance not less than the predetermined distance, is excluded from the work vehicle 10 with which the detection information is shared. In this case, when the first work vehicle 10 detects the detection target, the autonomous travel system 1 causes the first work vehicle 10 and the second work vehicle 10 to stop autonomously traveling, and excludes the third work vehicle 10 from the control targets. Note that the operator may either be able to set the work vehicle 10 with which the detection information is shared, or be able to set the predetermined range.

In an alternative embodiment, the autonomous travel system 1 may be configured to set a sharing level of the detection information. For example, when a detection target is detected, the autonomous travel system 1 may allow the operator to select whether to cause the plurality of work vehicles 10 to share the detection information with each other regardless of the type of the detection target (a person, an object, or the like), or to cause the plurality of work vehicles 10 to share the detection information with each other on condition that the type of the detection target is a person.

Furthermore, when the detection target is detected, the autonomous travel system 1 may allow the operator to select whether to cause the plurality of work vehicles 10 to share the detection information with each other regardless of whether the detection target is located inside the field or located outside the field, or to cause the plurality of work vehicles 10 to share the detection information with each other on condition that the detection target is located inside the field.

Furthermore, when the first work vehicle 10 detects the detection target, the autonomous travel system 1 may allow the operator to select whether or not the first work vehicle 10 and the second work vehicle 10 share the detection information with each other. Moreover, the autonomous travel system 1 may allow the operator to choose the work vehicle 10 with which the detection information is shared. For example, the autonomous travel system 1 may allow the operator to create a machine group and chose a machine with which the detection information is shared. For example, the operator may set the work vehicles 10A, 10B, and 10C with which the detection information is shared to the same machine group. In addition, the operator may set the work vehicles 10A, 10B, and 10C with which the detection information is shared to a first machine group, and may set the work vehicles 10D, 10E, and 10F with which the detection information is shared to a second machine group.

Further, when the detection target is detected, the autonomous travel system 1 may cause a plurality of operation terminals 20 to share the detection information with each other. For example, in a case where the plurality of work vehicles 10 are monitored by the plurality of operation terminals 20, when any of the work vehicles 10 detects the detection target, the autonomous travel system 1 may output the detection information to each of the plurality of operation terminals 20 and cause each of the operation terminals 20 to display the notification message M1 in a pop-up display manner.

### Recording of Detection Information

When the detection target is detected, the autonomous travel system 1 may store predetermined log information. Specifically, when the detection target is detected, the autonomous travel system 1 stores log information including camera images (moving images or still images) before and after the detection target is detected, a notification log (date and time when the notification message M1 is transmitted to the operation terminal 20) notified to the operator (remote monitor), and a confirmation log (date and time when the confirmation button for the notification message M1 is touched) in which the operator confirms the notification. The autonomous travel system 1 may store the log information in a server, the storage unit 12 of the work vehicle 10, or the storage unit 22 of the operation terminal 20. Thereby, for example, the user can confirm the log information at the arbitrary timing.

Alternatively, the autonomous travel system 1 may be configured to store the log information when any one of conditions, which include that a detection target is detected (first condition), that a detection target is detected in the same field (second condition), and that a detection target is detected regardless of whether the detection target is located inside the field or located outside the field (third condition), is met. Furthermore, the autonomous travel system 1 may allow the operator to select any one of the first to third conditions.

### Resumption of Autonomous Traveling

After the detection target is detected and the work vehicle 10 stops autonomously traveling, the autonomous travel system 1 can restart autonomously traveling if a predetermined condition is met. Specifically, in a case where the detection target is detected and the work vehicle 10 stops autonomously traveling, the autonomous travel system 1 permits the work vehicle 10 to resume autonomously traveling on condition that the operator confirms the camera images (peripheral images of the work vehicle 10, the images in which the detection target appears, or the like) upon stoppage of the work vehicle 10. For example, the autonomous travel system 1 causes the operation terminal 20 to display the peripheral images of the work vehicle 10, and when the operator confirms the peripheral images, the autonomous travel system 1 permits the work vehicle 10 to resume autonomously traveling. In addition, for example, the autonomous travel system 1 causes the operation terminal 20 to display an image in which the detection target appears, and when the operator confirms the image, the autonomous travel system 1 permits the work vehicle 10 to resume autonomously traveling. When the operator does not confirm the camera images, the autonomous travel system 1 prohibits the work vehicle 10 from autonomous traveling.

Note that the autonomous travel system 1 may determine that the operator confirms the camera images when the operator touches the confirmation button with the camera images being displayed on the operation terminal 20. In an alternative embodiment, the autonomous travel system 1 may determine that the operator confirms the camera images when determining that a line of sight of the operator is directed to the camera image displayed on the operation terminal 20 by identifying the line of sight of the operator with a camera connected to the operation terminal 20.

As described in the foregoing, in the above-mentioned embodiment, the obstacle detection device 15 corresponds to the control system according to the present disclosure, but the control system according to the present disclosure may be configured from the obstacle detection device 15 and the vehicle control device 11, or may be configured to include the work vehicle 10 and the operation terminal 20. For example, the control system according to the present disclosure may be the autonomous travel system 1.

### REFERENCE SIGNS LIST

1 Autonomous travel system
10 Work vehicle
11 Vehicle control device
15 Obstacle detection device
20 Operation terminal
21 Operation control unit
51 Detection control unit
53 Camera (detection unit)
54 Obstacle sensor (detection unit)
111 Travel processing unit
211 Setting processing unit
212 Display processing unit
213 Acceptance processing unit
511 Acquisition processing unit
512 Determination processing unit
513 Output processing unit
F Field (work region)
M1 Notification message (detection information)
M2 Confirmation message (detection information)
M3 Notification mark (detection information)
M4 Message (detection information)
P1 Selection screen
P2 Information display screen
P3 Camera screen
Ra Stop control range (vehicle control range)
Rb Deceleration control range (vehicle control range)
Rc Sounding control range (vehicle control range)
Rd1 First vehicle control range (vehicle control range)
Rd2 Second vehicle control range (vehicle control range)
Rm1 First measurement range
Rm2 Second measurement range
Rn Non-vehicle control range
Rs Non-detection range

## Claims

1. A control method comprising causing a work vehicle (10) to execute treating processes different from each other depending on whether a detection target detected by a detector during an autonomous travel of the work vehicle (10) in a work region (F) is located inside the work region (F) or located outside the work region (F), **characterized in that** the control method further comprising:
causing the work vehicle (10) to execute only a first treating process of notifying an operation terminal (20) which is an external device and that can display a travel status of the work vehicle (10) during the autonomous travel of detection information indicating that the detection target is detected when the detection target is located outside the work region (F); and
causing the work vehicle (10) to execute a second treating process including a process of notifying the operation terminal (20) of the detection information and a travel control process of controlling a travel of the work vehicle (10) during the autonomous travel when the detection target is located inside the work region (F).

2. The control method according to claim 1 further comprising causing the work vehicle (10) to execute treating processes that are different from each other depending on whether the detection target is located inside a vehicle control range set with the work vehicle (10) as a reference or located outside the vehicle control range when the detection target is located inside the work region (F).

3. The control method according to claim 2 further comprising:
causing the work vehicle (10) to execute a first treating process of notifying an operation terminal (20) that can display a travel status of the work vehicle (10) during the autonomous travel of detection information indicating that the detection target is detected when the detection target is located inside the work region (F).

4. The control method according to claim 3 further comprising causing the work vehicle (10) to stop autonomously traveling when no predetermined operation is accepted from a user of the operation in response to the detection information notified to the operation terminal (20) through the first treating process.

5. The control method according to claim 1 or 3, wherein the second treating process includes a process of notifying the operation terminal (20) of the detection information, a process of decelerating the work vehicle (10), a process of causing the work vehicle (10) to stop autonomously traveling, and a process of causing the work vehicle (10) to issue an alarm.

6. The control method according to claim 1, wherein the first treating process for a detection target located outside the work region (F) comprises notifying the operation terminal (20) of the detection information when the detection target is located inside the periphery of the work region (F), and refraining from notifying the operation terminal (20) of the detection information when the detection target is located outside the periphery of the work region (F).

7. The control method according to claim 1 further comprising causing a map screen displayed on an operation terminal (20) that can display a travel status of the work vehicle (10) during the autonomous travel to display at least one of a position of the detection target and a captured image capturing the detection target.

8. The control method according to claim 1 comprising:
accepting an operation of selecting a first monitoring mode to permit the work vehicle (10) to autonomously travel on condition that a user is present within a predetermined distance from the work vehicle (10), or a second monitoring mode to permit the work vehicle (10) to autonomously travel even when a user is not present within the predetermined distance from the work vehicle (10); and
causing the work vehicle (10) to execute the treating process according to a position of the detection target when the second monitoring mode is selected.

9. The control method according to claim 1 further comprising causing a first work vehicle to stop autonomously traveling and causing a second work vehicle during the autonomous travel in a second work region to stop autonomously traveling when the detection target is detected by a detector while the first work vehicle is autonomously traveling in a first work region.

10. A control program for causing one or more computer processors to cause a work vehicle (10) to execute the control method according to claims 1 to 9.

11. A control system for causing a work vehicle (10) to execute the control method according to claims 1 to 9.

## Patentansprüche

1. Steuerverfahren, umfassend Veranlassen eines Arbeitsfahrzeugs (10), Behandlungsprozesse auszuführen, die sich voneinander unterscheiden, abhängig davon, ob ein Detektionsziel, das während einer autonomen Fahrt des Arbeitsfahrzeugs (10) in einer Arbeitsregion (F) von einem Detektor detektiert wird, innerhalb der Arbeitsregion (F) gelegen ist oder außerhalb der Arbeitsregion (F) gelegen ist, **gekennzeichnet dadurch, dass** das Steuerverfahren ferner Folgendes umfasst:
Veranlassen des Arbeitsfahrzeugs (10) nur einen ersten Behandlungsprozess des Benachrichtigens eines Bedienungsterminals (20), das eine externe Vorrichtung ist und das einen Fahrstatus des Arbeitsfahrzeugs (10) während der autonomen Fahrt anzeigen kann, über Detektionsinformationen auszuführen, die angeben, dass das Detektionsziel detektiert ist, wenn das Detektionsziel außerhalb der Arbeitsregion (F) gelegen ist; und
Veranlassen des Arbeitsfahrzeugs (10) einen zweiten Behandlungsprozess auszuführen, der einen Prozess des Benachrichtigens des Bedienungsterminals (20) über Detektionsinformationen und einen Fahrsteuerprozess des Steuerns einer Fahrt des Arbeitsfahrzeugs (10) während der autonomen Fahrt beinhaltet, wenn das Detektionsziel innerhalb der Arbeitsregion (F) gelegen ist.

2. Steuerverfahren gemäß Anspruch 1, ferner umfassend Veranlassen des Arbeitsfahrzeugs (10) Behandlungsprozesse auszuführen, die sich voneinander unterscheiden, abhängig davon, ob das Detektionsziel, innerhalb eines bei dem Arbeitsfahrzeug (10) als Referenz eingestellten Fahrzeugsteuerbereichs gelegen ist oder außerhalb des Fahrzeugsteuerbereichs gelegen ist, wenn das Detektionsziel innerhalb der Arbeitsregion (F) gelegen ist.

3. Steuerverfahren gemäß Anspruch 2, ferner umfassend:
Veranlassen, dass das Arbeitsfahrzeug (10) einen ersten Behandlungsprozess des Benachrichtigens eines Bedienungsterminals (20), das einen Fahrstatus des Arbeitsfahrzeugs (10) während der autonomen Fahrt anzeigen kann, über Detektionsinformationen ausführt, die angeben, dass das Detektionsziel detektiert ist, wenn das Detektionsziel innerhalb der Arbeitsregion (F) gelegen ist.

4. Steuerverfahren gemäß Anspruch 3, ferner umfassend Veranlassen, dass das Arbeitsfahrzeug (10) das autonome Fahren stoppt, wenn von einem Benutzer des Bedienvorgangs kein vorbestimmter Bedienvorgang akzeptiert wird, als Antwort darauf, dass das Bedienungsterminal (20) durch den ersten Behandlungsprozess über die Detektionsinformationen benachrichtigt wird.

5. Steuerverfahren gemäß Anspruch 1 oder 3, wobei der zweite Behandlungsprozess einen Prozess des Benachrichtigens des Bedienungsterminals (20) über die Detektionsinformationen, einen Prozess des Verlangsamens des Arbeitsfahrzeugs (10), einen Prozess des Veranlassens des Arbeitsfahrzeugs (10), das autonome Fahren zu stoppen und einen Prozess des Veranlassens des Arbeitsfahrzeugs (10), einen Alarm auszugeben, beinhaltet.

6. Steuerverfahren gemäß Anspruch 1, wobei der erste Behandlungsprozess für ein Detektionsziel, das außerhalb der Arbeitsregion (F) gelegen ist, das Benachrichtigen des Bedienungsterminals (20) über die Detektionsinformationen umfasst, wenn das Detektionsziel innerhalb des Umfangs der Arbeitsregion (F) gelegen ist, und das Unterlassen des Benachrichtigens des Bedienungsterminals (20) über die Detektionsinformationen umfasst, wenn das Detektionsziel außerhalb des Umfangs der Arbeitsregion (F) gelegen ist.

7. Steuerverfahren gemäß Anspruch 1, ferner umfassend Veranlassen eines auf einem Bedienungsterminal (20) angezeigten Kartenbildschirms, der einen Fahrstatus des Arbeitsfahrzeugs (10) während der autonomen Fahrt anzeigen kann, mindestens eines von einer Position des Detektionsziels und eines erfassten Bildes, das das Detektionsziel erfasst, anzuzeigen.

8. Steuerverfahren gemäß Anspruch 1, umfassend:
Akzeptieren eines Bedienvorgangs des Auswählens eines ersten Überwachungsmodus, um dem Arbeitsfahrzeug (10) zu erlauben, unter der Bedingung autonom zu fahren, dass ein Benutzer innerhalb einer vorbestimmten Entfernung zu dem Arbeitsfahrzeug (10) anwesend ist, oder eines zweiten Überwachungsmodus, um dem Arbeitsfahrzeug (10) zu erlauben, autonom zu fahren, auch wenn kein Benutzer innerhalb der vorbestimmten Entfernung zu dem Arbeitsfahrzeug (10) anwesend ist; und
Veranlassen des Arbeitsfahrzeugs (10) den Behandlungsprozess gemäß einer Position des Detektionsziels auszuführen, wenn der zweite Überwachungsmodus ausgewählt ist.

9. Steuerverfahren gemäß Anspruch 1, ferner umfassend Veranlassen eines ersten Arbeitsfahrzeugs das autonome Fahren zu stoppen, und Veranlassen eines zweiten Arbeitsfahrzeugs während der autonomen Fahrt in einer zweiten Arbeitsregion das autonome Fahren zu stoppen, wenn das Detektionsziel durch einen Detektor detektiert wird, während das erste Arbeitsfahrzeug autonom in einer ersten Arbeitsregion fährt.

10. Steuerprogramm zum Veranlassen eines oder mehrerer Prozessoren, ein Arbeitsfahrzeug (10) zu veranlassen, das Steuerverfahren gemäß einem der Ansprüche 1 bis 9 auszuführen.

11. Steuersystem zum Veranlassen eines Arbeitsfahrzeugs (10) das Steuerverfahren gemäß den Ansprüchen 1 bis 9 auszuführen.

## Revendications

1. Procédé de commande comprenant le fait d'amener un véhicule de travail (10) à exécuter des processus de traitement différents les uns des autres en fonction du fait qu'une cible de détection détectée par un détecteur pendant un déplacement autonome du véhicule de travail (10) dans une région de travail (F) est située à l'intérieur de la région de travail (F) ou située à l'extérieur de la région de travail (F), **caractérisé en ce que** le procédé de commande comprend en outre :
le fait d'amener le véhicule de travail (10) à exécuter uniquement un premier processus de traitement consistant à notifier à un terminal d'exploitation (20), qui est un dispositif externe et qui peut afficher un état de déplacement du véhicule de travail (10) pendant le déplacement autonome, une information de détection indiquant que la cible de détection est détectée, lorsque la cible de détection est située à l'extérieur de la région de travail (F) ; et
le fait d'amener le véhicule de travail (10) à exécuter un deuxième processus de traitement incluant un processus de notification de l'information de détection au terminal d'exploitation (20) et un processus de commande de déplacement consistant à commander un déplacement du véhicule de travail (10) pendant le déplacement autonome, lorsque la cible de détection est située à l'intérieur de la région de travail (F).

2. Procédé de commande selon la revendication 1, comprenant en outre le fait d'amener le véhicule de travail (10) à exécuter des processus de traitement différents les uns des autres en fonction du fait que la cible de détection est située à l'intérieur d'une plage de commande de véhicule définie en prenant le véhicule de travail (10) comme référence, ou située à l'extérieur de la plage de commande de véhicule, lorsque la cible de détection est située à l'intérieur de la région de travail (F).

3. Procédé de commande selon la revendication 2, comprenant en outre :
le fait d'amener le véhicule de travail (10) à exécuter un premier processus de traitement consistant à notifier à un terminal d'exploitation (20) pouvant afficher un état de déplacement du véhicule de travail (10) pendant le déplacement autonome, une information de détection indiquant que la cible de détection est détectée, lorsque la cible de détection est située à l'intérieur de la région de travail (F).

4. Procédé de commande selon la revendication 3, comprenant en outre le fait d'amener le véhicule de travail (10) à interrompre le déplacement autonome lorsqu'aucune opération prédéterminée n'est acceptée de la part d'un utilisateur de l'exploitation en réponse à l'information de détection notifiée au terminal d'exploitation (20) par le premier processus de traitement.

5. Procédé de commande selon la revendication 1 ou 3, dans lequel le deuxième processus de traitement inclut un processus de notification de l'information de détection au terminal d'exploitation (20), un processus de décélération du véhicule de travail (10), un processus consistant à amener le véhicule de travail (10) à interrompre le déplacement autonome, et un processus consistant à amener le véhicule de travail (10) à émettre une alarme.

6. Procédé de commande selon la revendication 1, dans lequel le premier processus de traitement pour une cible de détection située à l'extérieur de la région de travail (F) comprend la notification de l'information de détection au terminal d'exploitation (20) lorsque la cible de détection est située à l'intérieur de la périphérie de la région de travail (F), et le fait de s'abstenir de notifier l'information de détection au terminal d'exploitation (20) lorsque la cible de détection est située à l'extérieur de la périphérie de la région de travail (F).

7. Procédé de commande selon la revendication 1, comprenant en outre le fait d'amener un écran cartographique affiché sur un terminal d'exploitation (20) pouvant afficher un état de déplacement du véhicule de travail (10) pendant le déplacement autonome, à afficher au moins l'une parmi une position de la cible de détection et une image capturée capturant la cible de détection.

8. Procédé de commande selon la revendication 1, comprenant :
l'acceptation d'une opération de sélection d'un premier mode de surveillance pour permettre au véhicule de travail (10) de se déplacer de manière autonome à condition qu'un utilisateur soit présent à l'intérieur d'une distance prédéterminée du véhicule de travail (10), ou d'un deuxième mode de surveillance pour permettre au véhicule de travail (10) de se déplacer de manière autonome même lorsqu'un utilisateur n'est pas présent à l'intérieur d'une distance prédéterminée du véhicule de travail (10) ; et
le fait d'amener le véhicule de travail (10) à exécuter le processus de traitement selon une position de la cible de détection lorsque le deuxième mode de surveillance est sélectionné.

9. Procédé de commande selon la revendication 1, comprenant en outre le fait d'amener un premier véhicule de travail à interrompre le déplacement autonome et d'amener un deuxième véhicule de travail, pendant le déplacement autonome dans une deuxième région de travail, à interrompre le déplacement autonome, lorsque la cible de détection est détectée par un détecteur pendant que le premier véhicule de travail se déplace de manière autonome dans une première région de travail.

10. Programme de commande destiné à amener un ou plusieurs processeurs informatiques à amener un véhicule de travail (10) à exécuter le procédé de commande selon les revendications 1 à 9.

11. Système de commande destiné à amener un véhicule de travail (10) à exécuter le procédé de commande selon les revendications 1 à 9.
